# EUROPÄISCHE PATENTSCHRIFT

(11) **EP 2 160 300 B1**
(45) Veröffentlichungstag und Bekanntmachung des Hinweises auf die Patenterteilung: **06.04.2011**
(21) Anmeldenummer: 08773708.6
(22) Anmeldetag: 26.06.2008
(51) Int. Cl.: B60J 5/06

(54) **SCHIEBETÜRE FÜR EIN FAHRZEUG**
SLIDING DOOR FOR A VEHICLE
PORTE COULISSANTE POUR UN VÉHICULE

(30) Priorität: 28.06.2007 DE 102007029815; 27.07.2007 DE 102007035230
(43) Veröffentlichungstag der Anmeldung: 10.03.2010
(73) Patentinhaber: DURA Automotive Body & Glass Systems GmbH, 58840 Plettenberg (DE)
(72) Erfinder: HEUEL, Gerhard, 57462 Olpe (DE); KREHMKE, Michael, 58840 Plettenberg (DE); ROTTMANN, Ralf, 57489 Drolshagen (DE)
(74) Vertreter: Zinnecker, Armin
(86) Internationale Anmeldenummer: PCT/EP2008/005233
(87) Internationale Veröffentlichungsnummer: WO 2009/000541

(56) Entgegenhaltungen:
- DE-A1- 10 326 241
- DE-U1- 9 321 411
- FR-A- 2 880 842
- FR-A- 2 893 543
- US-B1- 6 382 705

## Beschreibung

Die Erfindung betrifft eine Schiebetüre für ein Fahrzeug, insbesondere für ein Kraftfahrzeug. Eine solche Schiebetür ist aus FR 2 880 842 bekannt.

Aus der EP 1 721 768 A1 ist eine Schiebetüre für Kraftfahrzeuge bekannt, die an ihrer Innenseite eine Führungsschiene aufweist. An der Führungsschiene ist ein Gleitschlitten längsverschieblich gelagert. Ferner umfaßt die Schiebetüre einen Scharnierbügel, der an dem Gleitschlitten und an einem Karosserieflansch oder einem sonstigen Karosserierteil drehbar gelagert ist.

Aus der DE 10 2004 039 885 A1 und der EP 1 745 958 A2 sind weitere Schiebetüren bekannt.

Aufgabe der Erfindung ist es, die vorbekannte Schiebetüre zu verbessern.

Erfindungsgemäß wird diese Aufgabe durch die kennzeichnenden Merkmale des Anspruchs 1 gelöst. Die Schiebetüre umfaßt einen Zwischenhebel, der an dem Gleitschlitten drehbar gelagert ist, und einen Steuerhebel, der an dem Zwischenhebel und an einem oder dem Karosserieflansch oder sonstigen Karosserieteil drehbar gelagert ist.

Vorteilhafte Weiterbildungen sind in den Unteransprüchen beschrieben.

Vorzugsweise ist die Schiebetüre an dem dem Scharnierbügel abgewandten Ende drehbar und längsverschieblich gelagert. Zu diesem Zweck kann an dem Fahrzeug ein Scharnierbolzen für eine Scharnierkulisse an der Schiebetüre vorgesehen sein. Der Scharnierbolzen befindet sich vorzugsweise in dem dem Scharnierbügel abgewandten Bereich der Türöffnung. Die Scharnierkulisse, die vorzugsweise U-förmig ist, ist vorzugsweise an dem dem Scharnierbügel in der geschlossenen Stellung der Schiebetüre abgewandten Ende der Schiebetüre vorgesehen. Durch das Zusammenwirken des Scharnierbolzens und der Scharnierkulisse ist die Schiebetüre drehbar und längsverschieblich gelagert. Die Anordnung kann allerdings auch umgekehrt getroffen sein, also in der Weise, daß der Scharnierbolzen an der Schiebetüre und die Scharnierkulisse an dem Fahrzeug vorgesehen sind.

Eine weitere vorteilhafte Weiterbildung ist dadurch gekennzeichnet, daß an dem Steuerhebel ein Führungsstift vorgesehen ist, der in einer an der Schiebetüre vorgesehenen Führungsbahn geführt ist. Der Führungsstift ist im Abstand von der Drehachse des Steuerhebels an dem Zwischenhebel angeordnet. Er ist in einer türfesten Führungsbahn geführt.

Nach einer weiteren vorteilhaften Weiterbildung ist der Gleitschlitten gegenüber dem Zwischenhebel arretierbar. Im arretierten Zustand ist der Gleitschlitten nicht mehr gegenüber dem Zwischenhebel drehbar.

Vorteilhaft ist es, wenn der Zwischenhebel einen Anschlag für den Gleitschlitten aufweist. Der Anschlag kann an einem Hebelarm des Zwischenhebels vorgesehen sein.

An dem Gleitschlitten ist vorzugsweise ein Sperrhebel drehbar gelagert. Der Sperrhebel kann federbelastet sein.

Nach einer weiteren vorteilhaften Weiterbildung weist der Zwischenhebel einen Arretierstift auf. Der Arretierstift ist vorzugsweise an einem Hebelarm des Zwischenhebels vorgesehen.

Vorzugsweise weist der Sperrhebel eine Führungsbahn für den Arretierstift auf. Nach einer weiteren vorteilhaften Weiterbildung ist an dem Sperrhebel, insbesondere an dessen Führungsbahn, eine Rastvertiefung für den Arretierstift vorgesehen.

Eine weitere vorteilhafte Weiterbildung ist dadurch gekennzeichnet, daß an der Schiebetüre ein Entriegelungsstift vorgesehen ist. Der Entriegelungsstift wirkt mit dem Sperrhebel zusammen. Durch den Entriegelungsstift wird die Arretierung des Arretierstifts bei der Schließbewegung der Schiebetüre gelöst.

Nach einer weiteren vorteilhaften Weiterbildung ist an der Schiebetüre ein Umlenkhebel drehbar gelagert. Der Umlenkhebel wirkt mit dem Sperrhebel zusammen. Durch den Umlenkhebel wird die Arretierung des Arretierstifts bei der Schließbewegung der Schiebetüre gelöst.

Vorteilhaft ist es, wenn der Umlenkhebel federbelastet ist.

Nach einer weiteren vorteilhaften Weiterbildung ist an dem Gleitschlitten ein Aktivierungsstift zum Verschwenken des Umlenkhebels vorgesehen. Durch den Aktivierungsstift wird der Umlenkhebel bei der Bewegung der Schiebetüre von der geschlossenen Stellung in die geöffnete Stellung in die Ent-Arretierungsstellung verschwenkt, in der der Umlenkhebel die Arretierung des Arretierstifts bei der Schließbewegung der Schiebetüre löst, also in die aktivierte Stellung des Umlenkhebels.

Vorteilhaft ist es, wenn an dem Zwischenhebel ein Deaktivierungsstift zum Verschwenken des Umlenkhebels vorgesehen ist. Der Deaktivierungsstift kann an einem Hebelarm des Zwischenhebels vorgesehen sein. Durch den Deaktivierungsstift wird der Umlenkhebel bei der Bewegung der Schiebetüre in die vollständig geschlossene Stellung in die deaktivierte Stellung verschwenkt, in der der Umlenkhebel nicht mit dem Sperrhebel zur Lösung der Arretierung des Arretierstifts zusammenwirken kann. Der Deaktivierungsstift verschwenkt während der Schließbewegung der Schiebetüre den Umlenkhebel, nachdem der Umlenkhebel die Arretierung des Sperrhebels durch den Arretierstift gelöst hat.

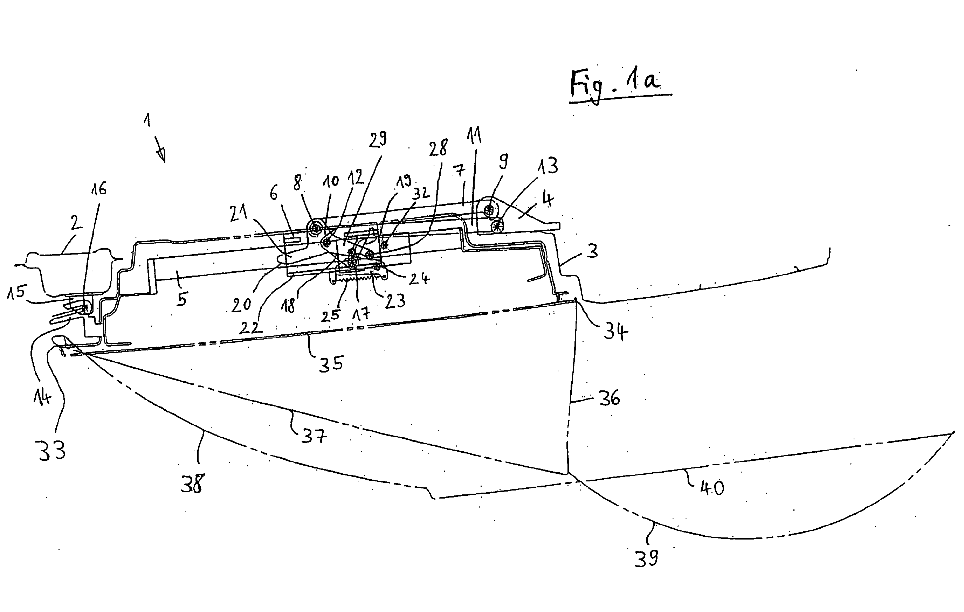

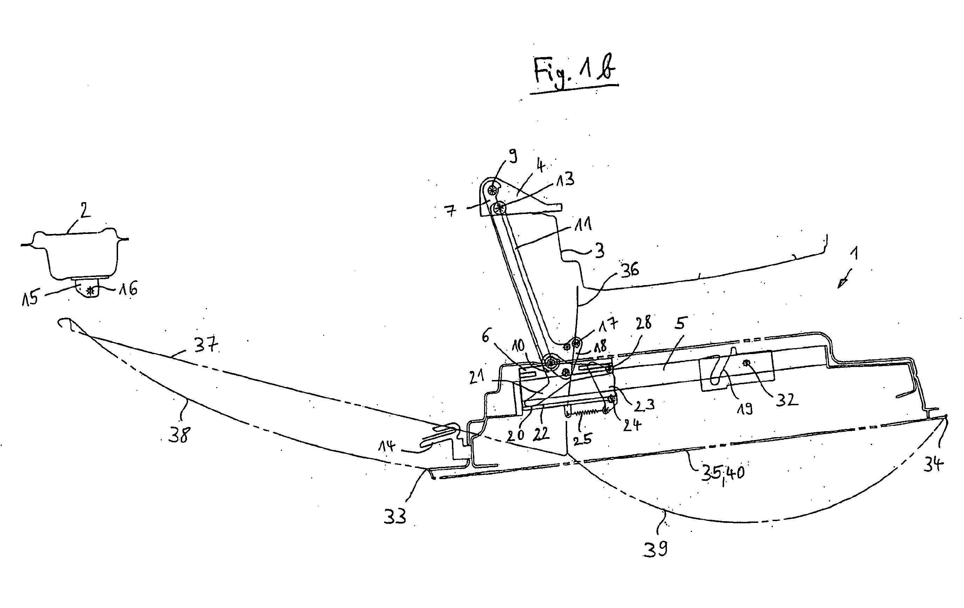

Ausführungsbeispiele der Erfindung werden nachstehend anhand der beigefügten Zeichnung im einzelnen erläutert. In der Zeichnung zeigt
- Fig. 1 a: eine erste Ausführungsform einer Schiebetüre für ein Kraftfahrzeug in der geschlossenen Stellung in einer schematischen Ansicht von oben,
- Fig. 1 b: die Schiebetüre gemäß Fig. 1a in der vollständig geöffneten Stel- lung,
- Fig. 2a-g: die Öffnungsbewegung der Schiebetüre gemäß Fig. 1 von der ge- schlossenen Stellung in die vollständig geöffnete Stellung in einer schematischen Ansicht von oben in einem vergrößerten Maßstab,
- Fig. 2h: eine Zwischenstellung der Schiebetüre während der Bewegung von der geöffneten in die geschlossene Stellung,
- Fig. 3a-h: Teile der Darstellungen der Fig. 2a-h in einem noch weiter vergrö- ßerten Maßstab,
- Fig. 4a: eine Abwandlung der Schiebetüre gemäß Fig. 1 bis 3 in der ge- schlossenen Stellung in einer schematischen Ansicht von oben, wobei die Schiebetüre gemäß Fig. 4a einen Umlenkhebel aufweist,
- Fig. 4b: die Schiebetüre gemäß Fig. 4a in der vollständig geöffneten Stel- lung,
- Fig. 5a-h: die Öffnungsbewegung der Schiebetüre gemäß Fig. 4 von der ge- schlossenen Stellung in die vollständig geöffnete Stellung in einer schematischen Ansicht von oben in einem vergrößerten Maßstab,

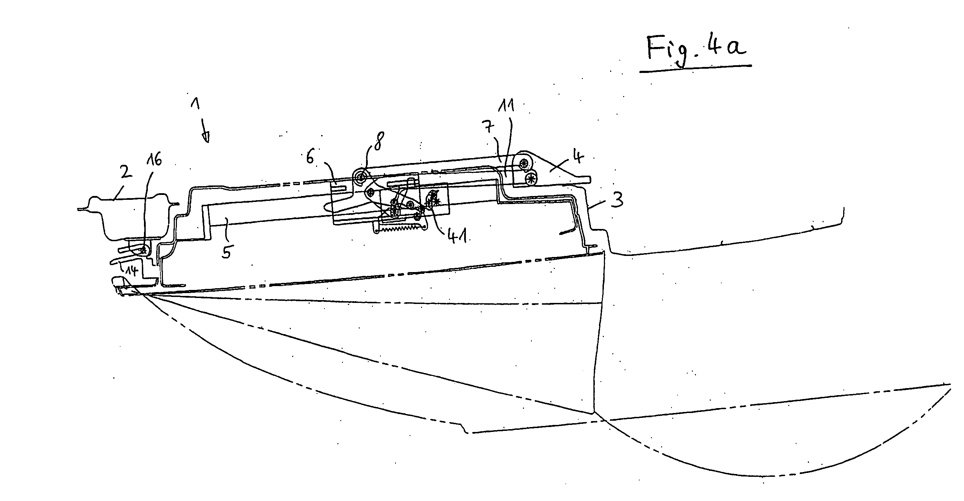

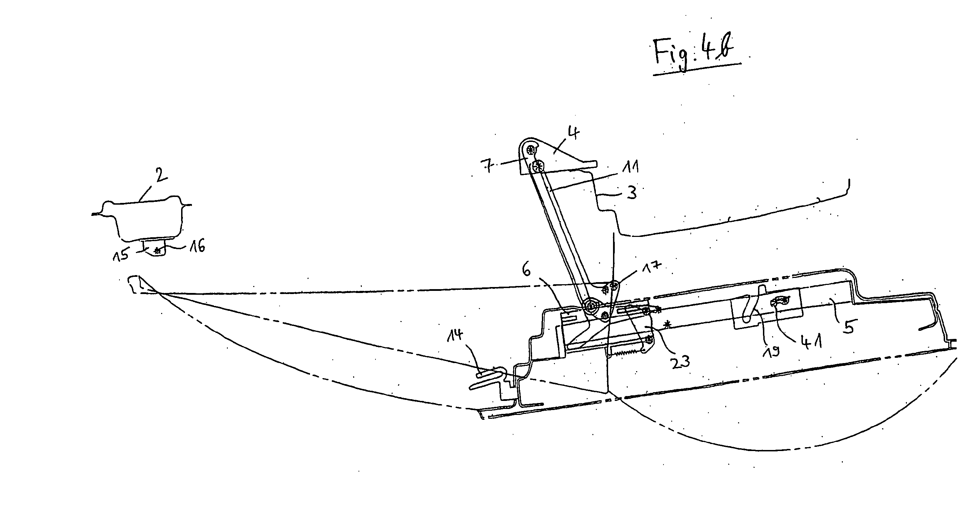

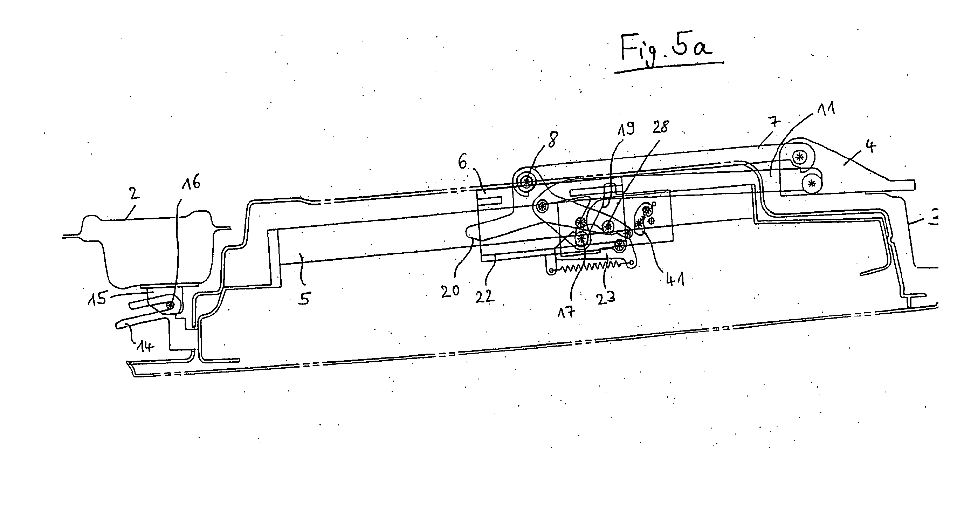

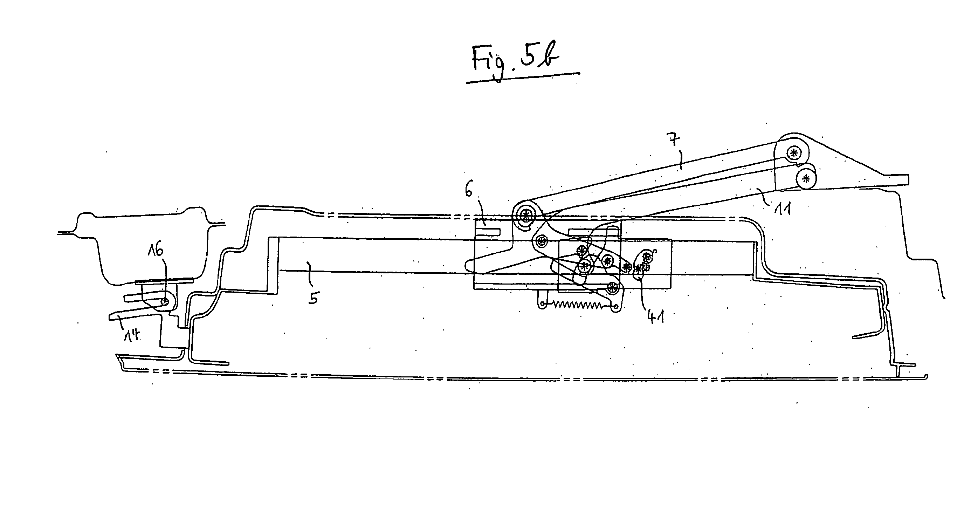

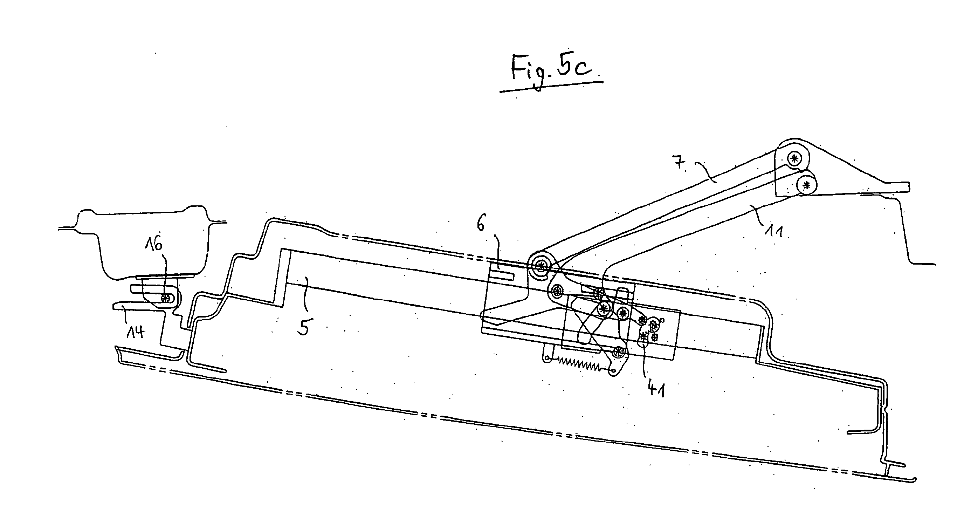

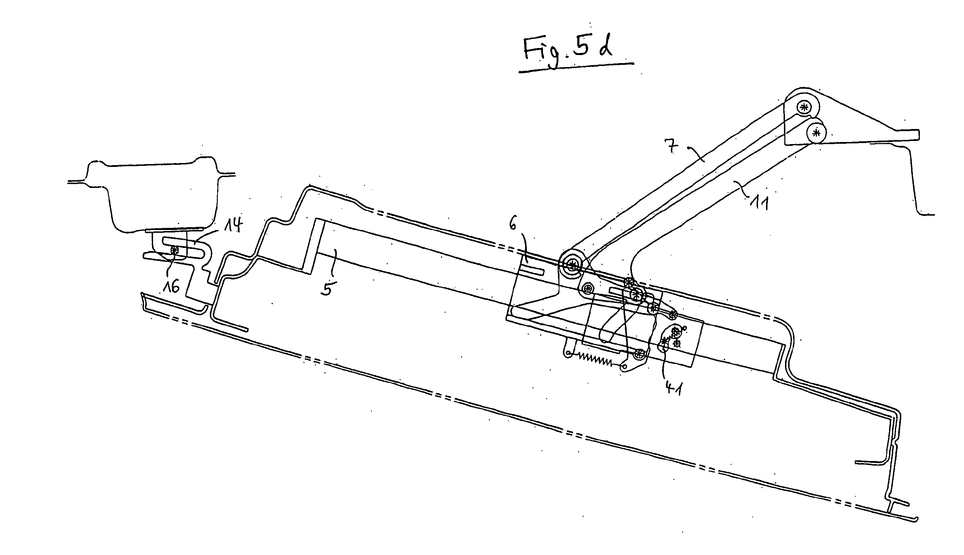

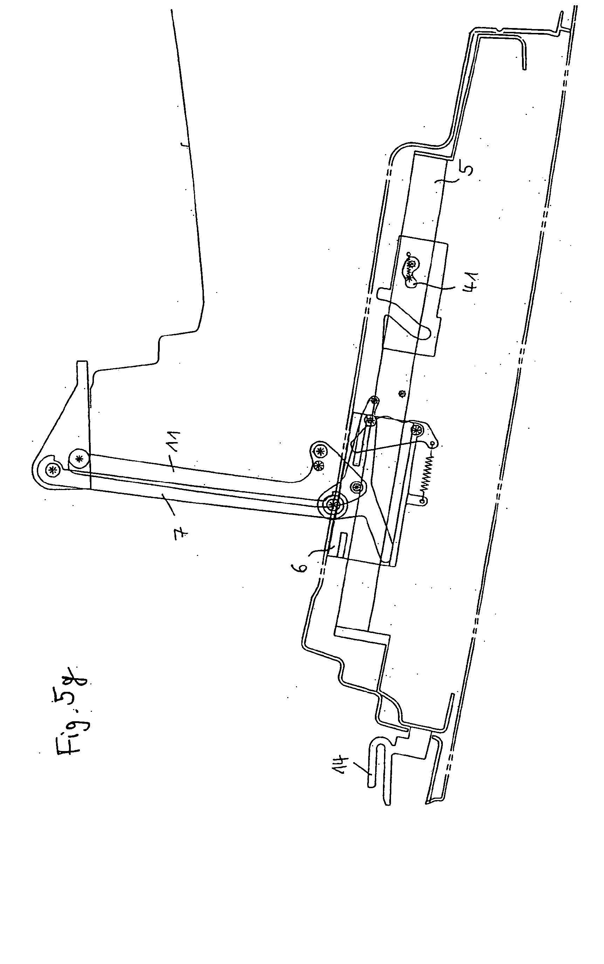

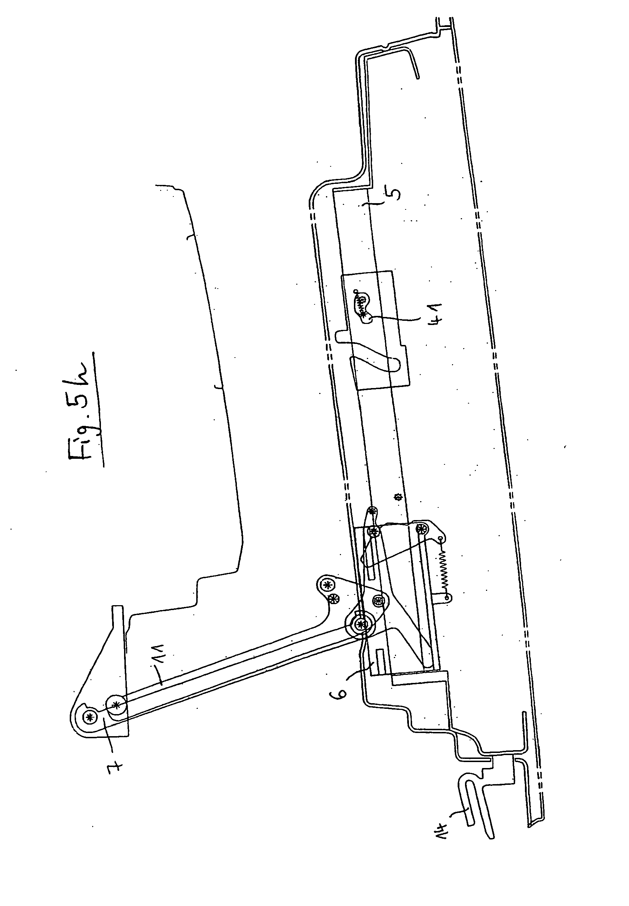

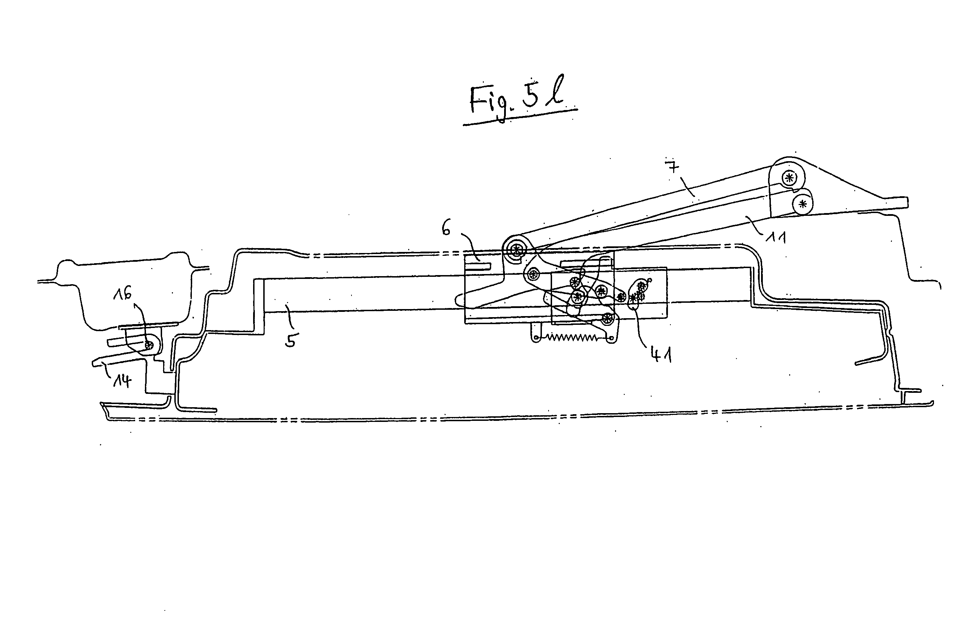

- Fig. 5i-I: die Schiebetüre gemäß Fig. 4 und 5a-h während der Schließbewe- gung,

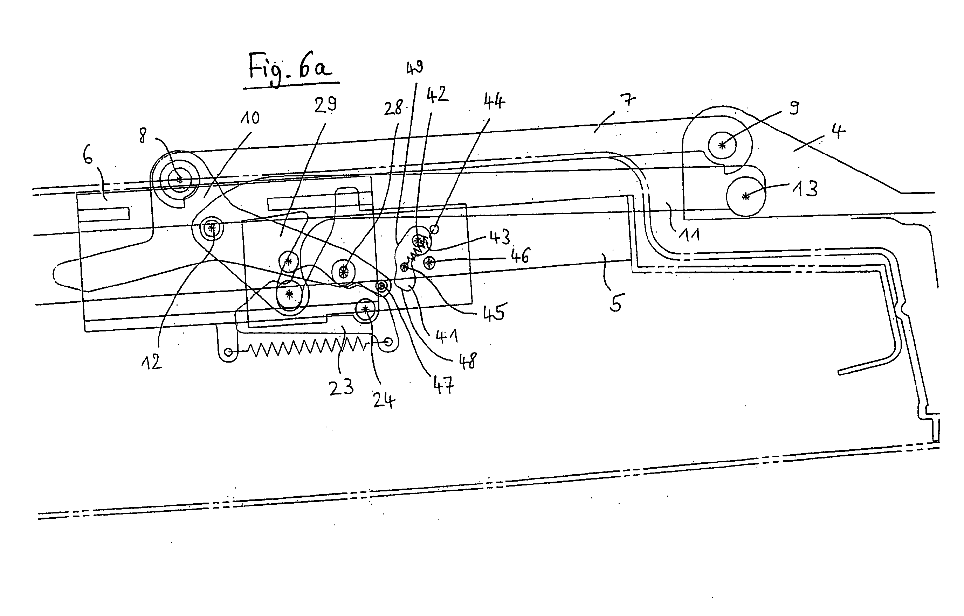

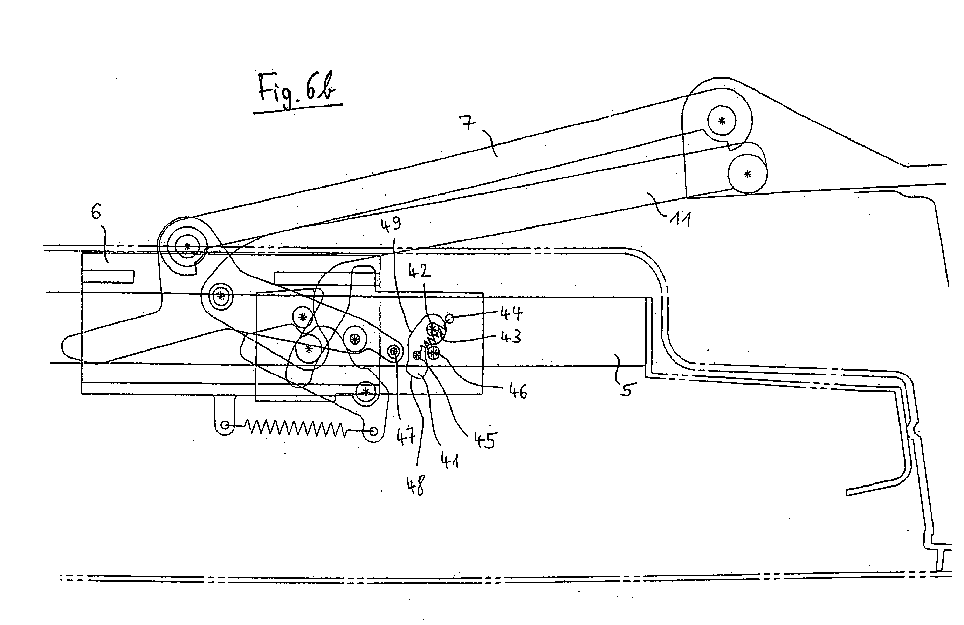

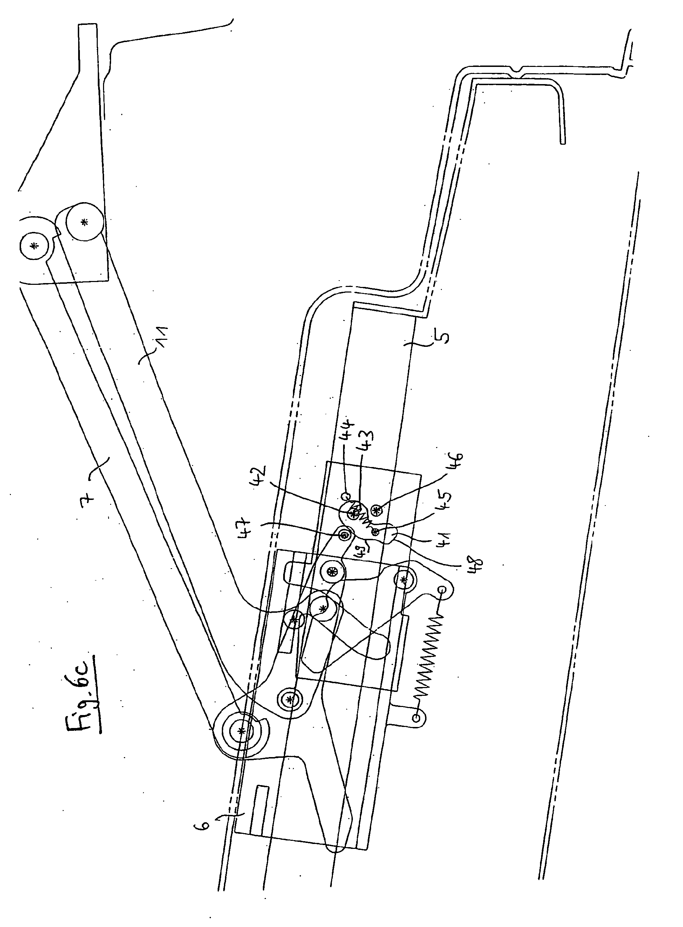

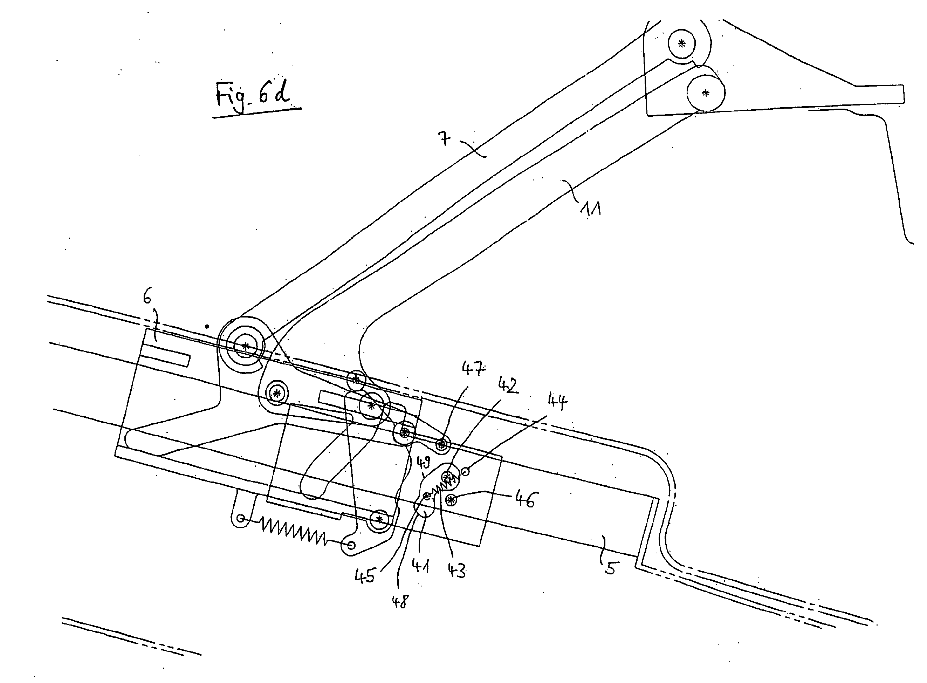

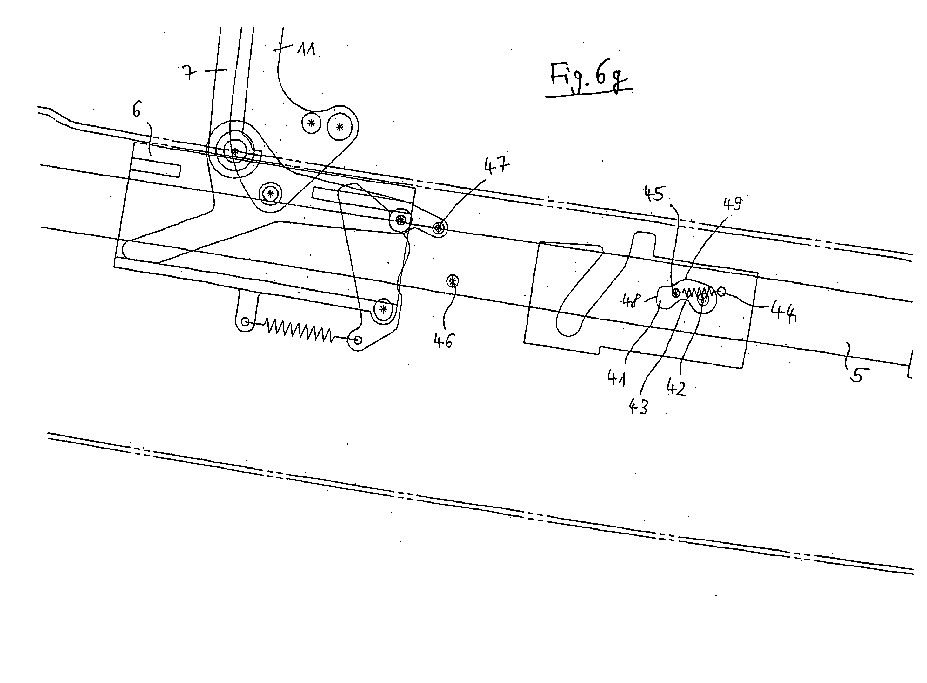

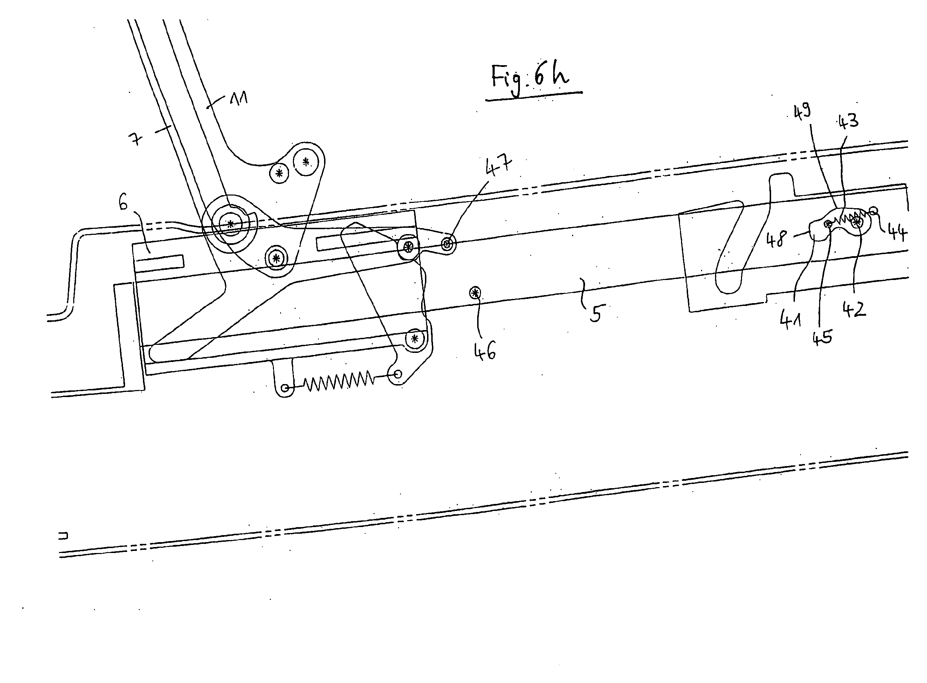

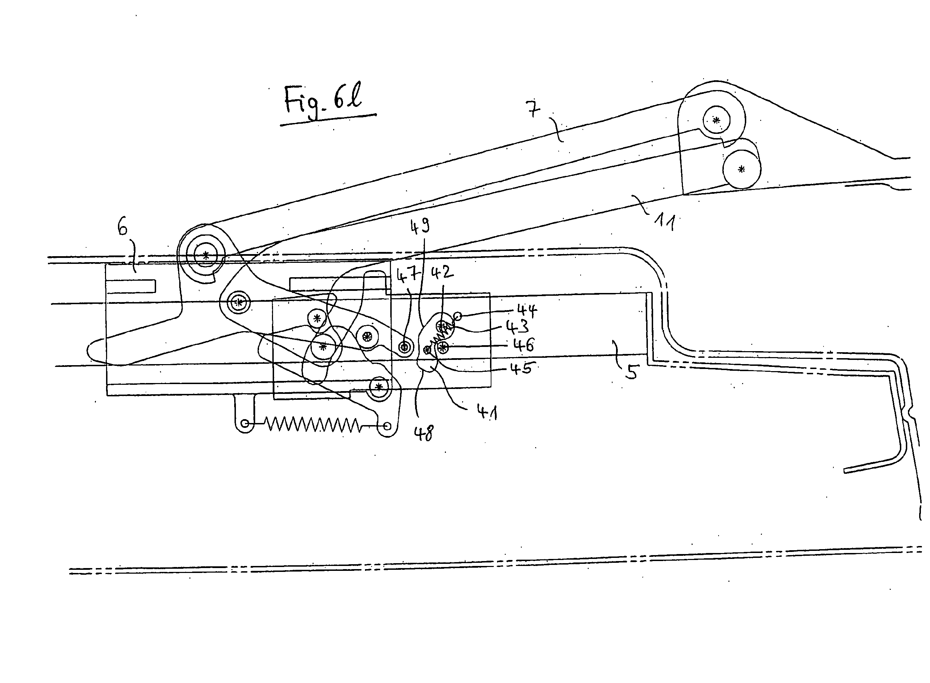

- Fig. 6a-I: Teile der Darstellungen der Fig. 5a-l in einem noch weiter vergrö- ßerten Maßstab,

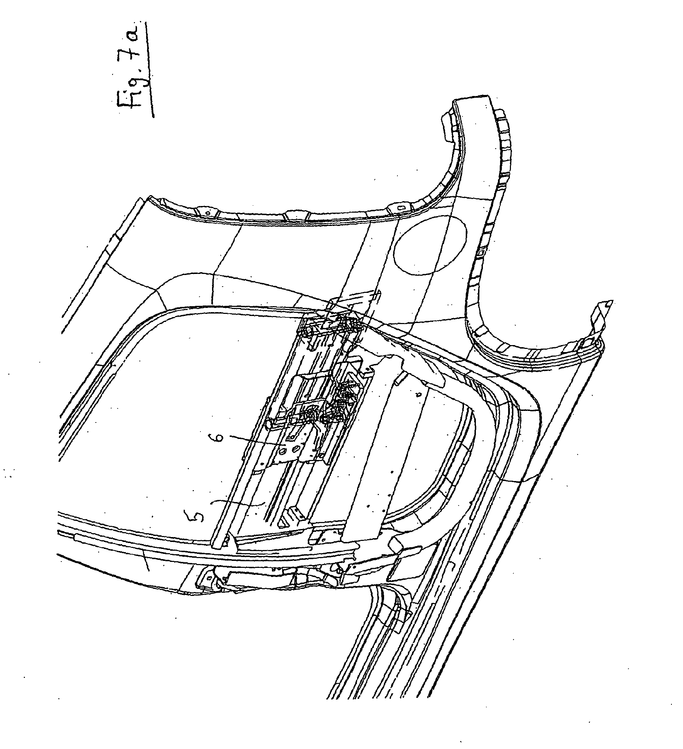

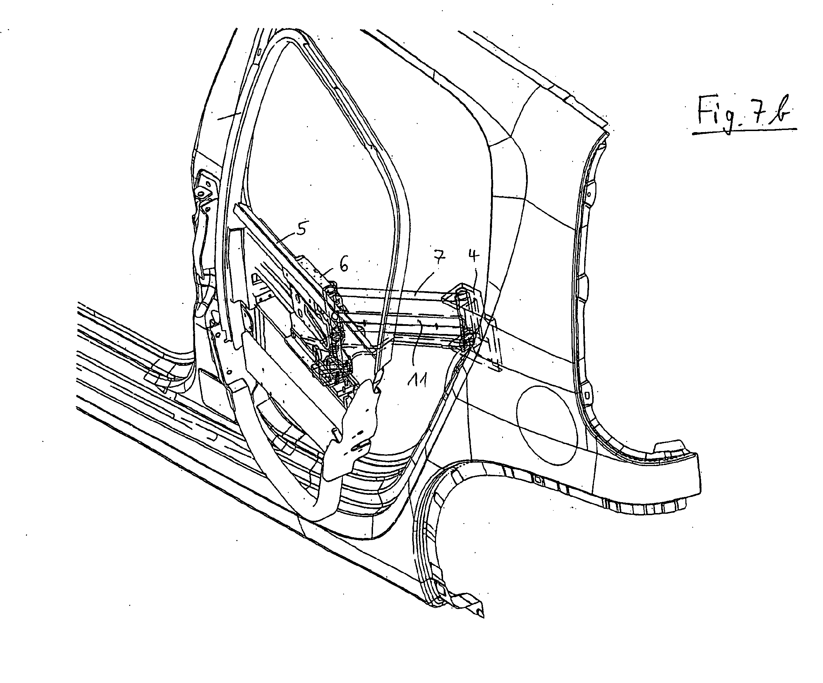

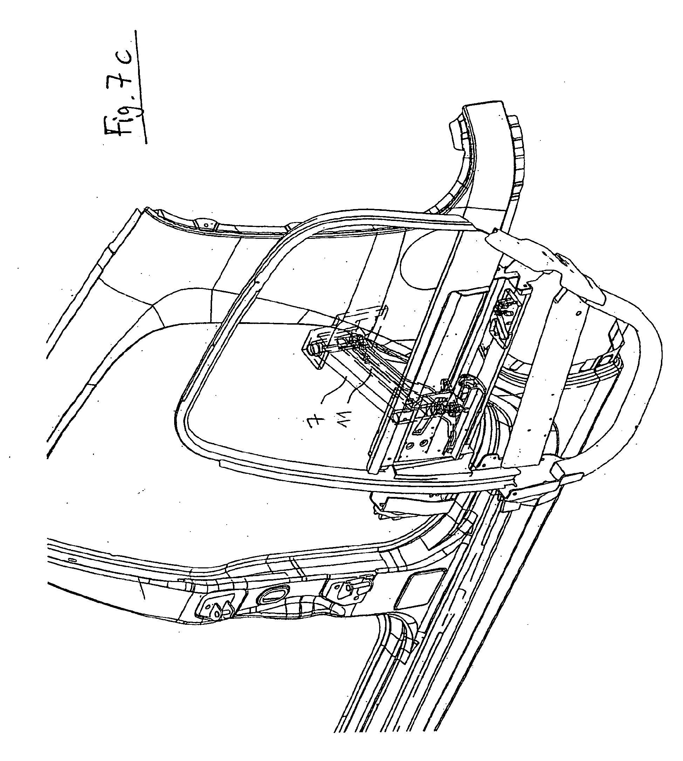

- Fig. 7a-c: die Schiebetüre gemäß Fig. 4 - 6 in der geschlossenen Stellung, in einer Zwischenstellung und in der vollständig geöffneten Stellung, jeweils in einer perspektivischen Ansicht,

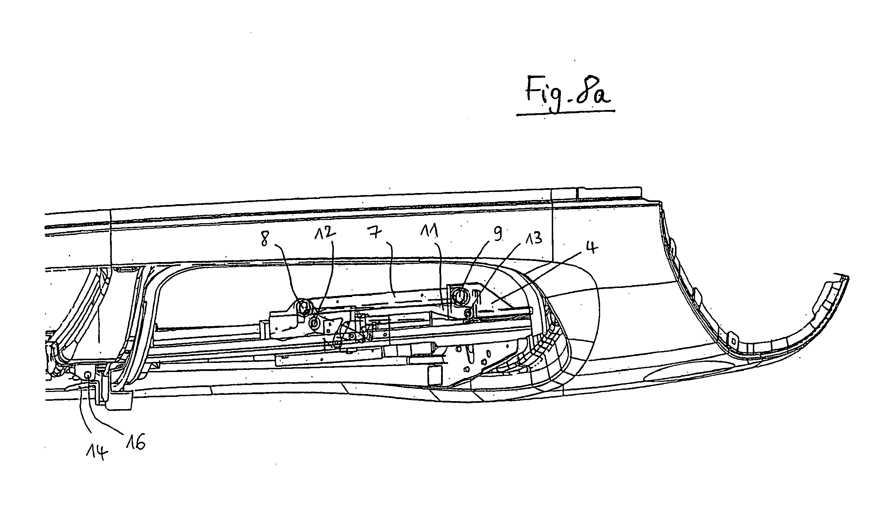

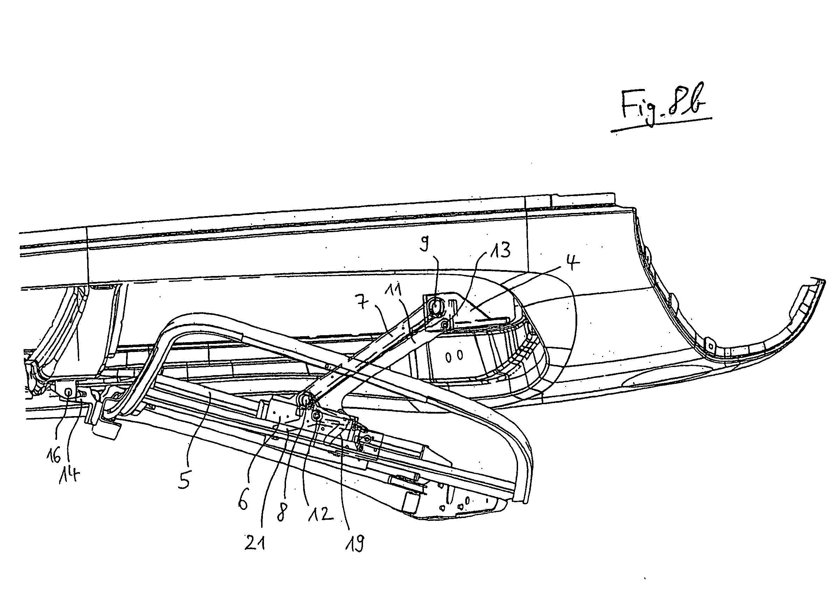

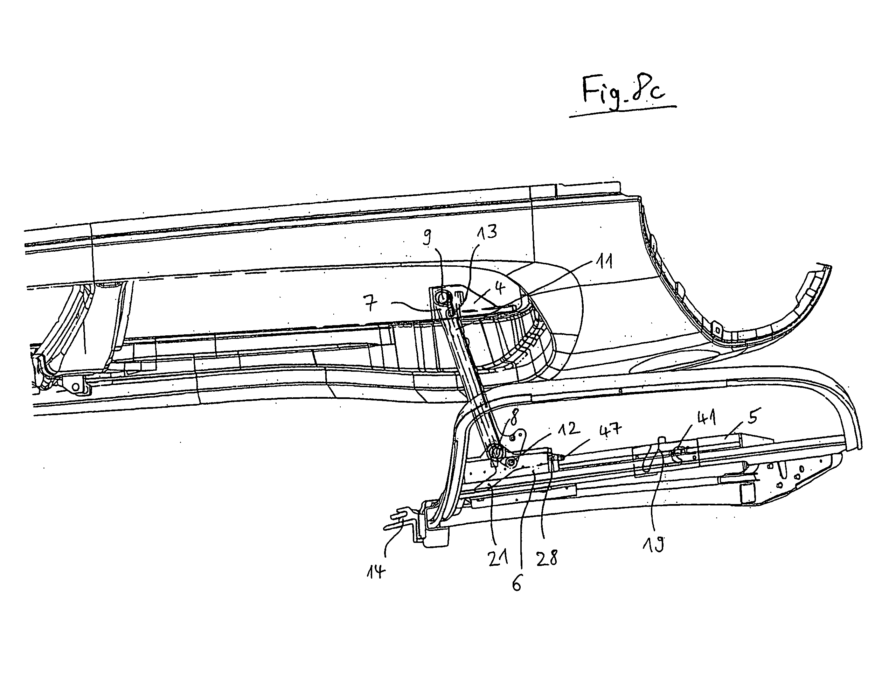

- Fig. 8a-c: die Schiebetüre gemäß Fig. 7a-c, jeweils in einer Ansicht von oben, und

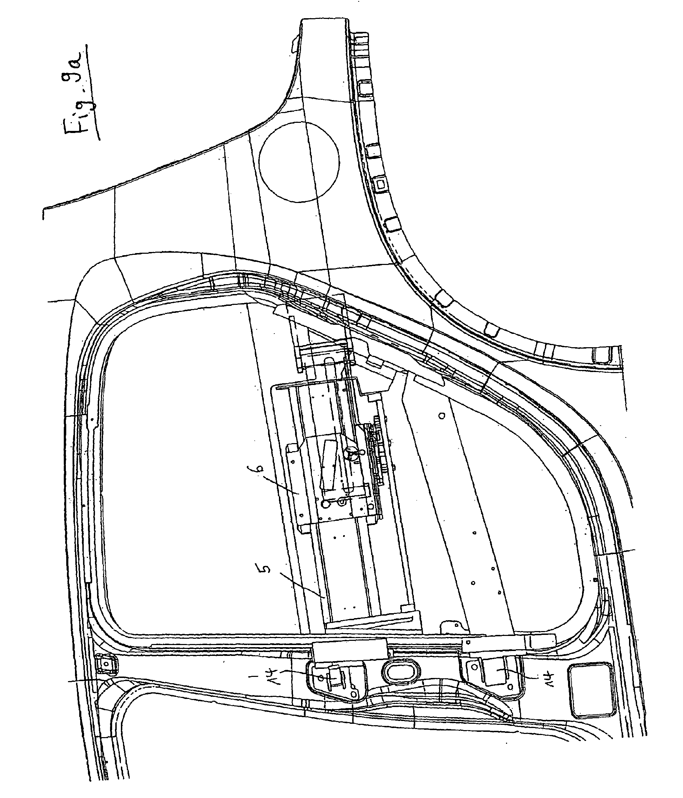

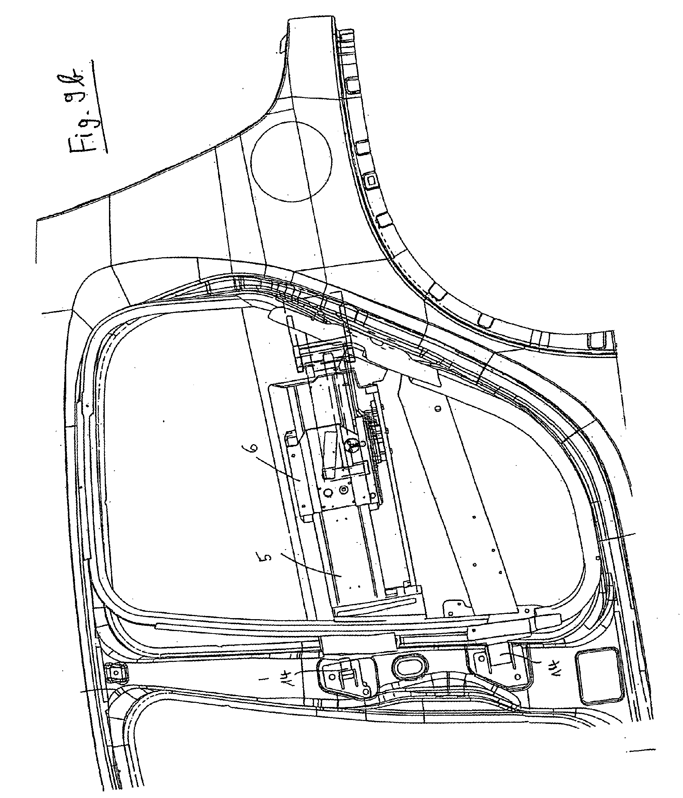

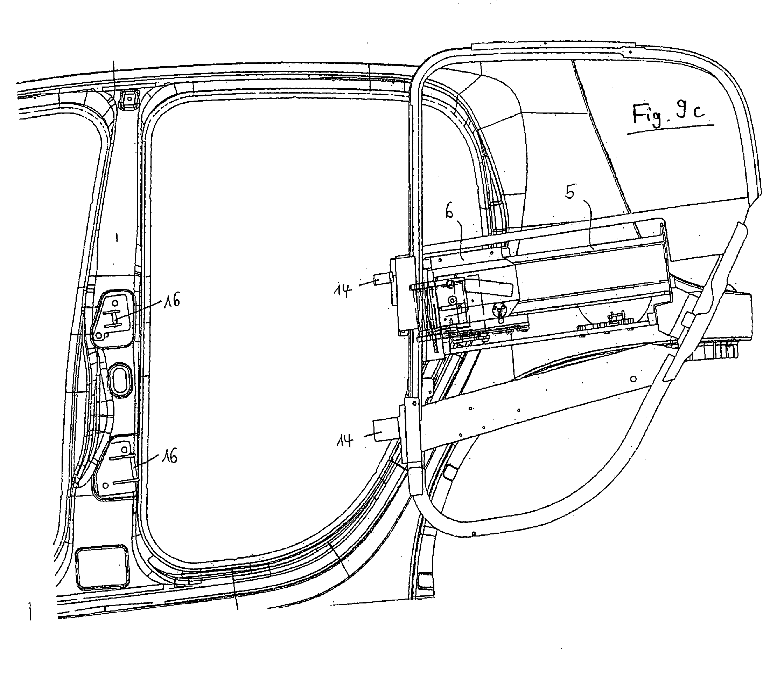

- Fig. 9a-c: die Schiebetüre gemäß Fig. 7a-c und 8a-c, jeweils in einer Seiten- ansicht.

Fig. 1 bis 3 zeigt eine erste Ausführungsform der Erfindung. In Fig. 1a, 2a und 3a befindet sich die Schiebetüre 1 in der vollständig geschlossenen Stellung. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 auf, der an dem Gleitschlitten 6 um ein Gelenk 8 drehbar gelagert ist und der an dem Karosserieflansch 4 um ein Gelenk 9 drehbar gelagert ist. An dem Gleitschlitten 6 ist ein Zwischenhebel 10 drehbar gelagert, und zwar um die Achse des Gelenks 8, um die auch der Gleitschlitten 6 an dem Scharnierbügel 7 drehbar gelagert ist. Die Schiebetüre 1 umfaßt ferner einen Steuerhebel 11, der an dem Zwischenhebel 10 um ein Gelenk 12 drehbar gelagert ist und der an dem Karosserieflansch 4 um ein Gelenk 13 drehbar gelagert ist. Der Scharnierbügel 7, der Steuerhebel 11, der Zwischenhebel 10 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Scharnierkulisse 14 vorgesehen, die im wesentlichen parallel zur Fahrzeug-Längsrichtung verläuft. Sie ist an ihrem dem Scharnierbügel 7 abgewandten, im Ausführungsbeispiel also vorderen Ende offen. An einem Karosserieflansch 15, der an der B-Säule 2 befestigt ist, ist ein Scharnierbolzen 16 vorgesehen, der in die U-förmige Scharnierkulisse 14 eingreift. Durch die U-förmige Scharnierkulisse 14 und den Scharnierbolzen 16 ist die Schiebetüre 1 in ihrer geschlossenen Stellung an ihrem dem Scharnierbügel 7 abgewandten Ende drehbar und längsverschieblich gelagert.

An dem Steuerhebel 11 ist ein Führungsstift 17 vorgesehen. In der geschlossenen Stellung der Schiebetüre 1 befindet sich das Gelenk 12 im Abstand nach außen und hinten von dem Gelenk 8, wobei die Verbindungslinie von dem Gelenk 8 zu dem Gelenk 12 in einem Winkel zur Fahrzeug-Längsachse verläuft. Der Winkel beträgt etwa 60°; andere Winkel sind möglich. Das Gelenk 13 befindet sich ebenfalls im Abstand in einer Richtung nach außen und hinten von dem Gelenk 9, wobei die Verbindungslinie von dem Gelenk 9 zu dem Gelenk 13 ebenfalls in einem Winkel zur Fahrzeug-Längsachse verläuft. Der Winkel beträgt etwa 60°; andere Winkel sind möglich. Der Führungsstift 17 ist an einem Hebelarm 18 des Steuerhebels 11 vorgesehen, der in einem Winkel zur Längserstreckung des Steuerhebels 11 verläuft. Der Winkel beträgt etwa 30°; andere Winkel sind möglich. Der Abstand des Führungsstifts 17 von dem Gelenk 12 ist etwa doppelt so groß wie der Abstand des Gelenks 12 von dem Gelenk 8.

Der Führungsstift 17 ist in einer Führungsbahn 19 geführt. Die Führungsbahn 19 ist an der Schiebetüre 1 vorgesehen. Dementsprechend ist die Führungsbahn 19 also eine türfeste Führungsbahn. Sie verläuft von außen nach innen und von vorne nach hinten in einem Winkel zur Fahrzeug-Längsachse. Der Winkel beträgt etwa 120°; andere Winkel sind möglich.

Der Zwischenhebel 10 weist einen Anschlag 20 für den Gleitschlitten 6 auf. Der Anschlag 20 ist an einem Hebelarm 21 des Zwischenhebels 10 vorgesehen. Der Hebelarm 21 verläuft von der Linie von dem Gelenk 8 zu dem Gelenk 12 in einem Winkel nach vorne, und zwar etwa auf der Höhe des Gelenks 12. Der Winkel beträgt etwa 90°; andere Winkel sind möglich. Der Anschlag 20 an dem Hebelarm 21 des Zwischenhebels 10 kann mit einer im wesentlichen in Fahrzeug-Längsrichtung verlaufenden Leiste 22 des Gleitschlittens 6 zusammenwirken.

An dem Gleitschlitten 6 ist ein Sperrhebel 23 um eine Achse 24 drehbar gelagert. Der Sperrhebel 23 ist federbelastet, und zwar durch eine Zugfeder 25, die an einem Vorsprung 26 des Gleitschlittens 6 und an einem Vorsprung 27 des Sperrhebels 23 befestigt ist. Die im wesentlichen in Fahrzeug-Längsrichtung verlaufende Zugfeder 25 belastet den Sperrhebel 23 im Uhrzeigersinn um die Achse 24.

Der Zwischenhebel 10 weist einen Arretierstift 28 auf. Der Arretierstift 28 ist an einem Hebelarm 29 des Zwischenhebels 10 vorgesehen. Der Hebelarm 29 verlängert die Verbindungslinie von dem Gelenk 8 zu dem Gelenk 12 unter einem Winkel in Richtung nach hinten. Der Winkel beträgt etwa 135°; andere Winkel sind möglich. Der Abstand zwischen dem Arretierstift 28 und dem Gelenk 12 ist etwa dreimal so groß wie der Abstand zwischen dem Gelenk 12 und dem Gelenk 8.

Der Sperrhebel 23 weist eine Führungsbahn 30 für den Arretierstift 28 auf. An der Führungsbahn 30 des Sperrhebels 23 ist eine Rastvertiefung 31 für den Arretierstift 28 vorgesehen.

Der Gleitschlitten 6 ist gegenüber dem Zwischenhebel 10 arretierbar. Die Arretierung des Gleitschlittens 6 relativ zum Zwischenhebel 10 erfolgt durch den Anschlag 20, der an der Leiste 22 des Gleitschlittens 6 anliegt, und durch den Arretierstift 28, der in der Rastvertiefung 31 der Führungsbahn 30 des Sperrhebels 23 liegt. In der verrasteten Stellung ist der Gleitschlitten 6 nicht mehr relativ zum Zwischenhebel 10 drehbar.

An der Schiebetüre 1 ist ein Entriegelungsstift 32 vorgesehen. Der Entriegelungsstift 32 liegt hinter der Führungsbahn 19. Er kann mit dem Sperrhebel 23 zusammenwirken, und zwar in der Weise, daß er bei der Schließbewegung der Schiebetüre 1 die Arretierung des Arretierstifts 28 in der Rastvertiefung 31 löst.

In der vollständig geschlossenen Stellung der Schiebetüre 1, die in Fig. 1a, 2a und 3a gezeigt ist, liegt der Scharnierbolzen 16 in der U-förmigen Scharnierkulisse 14, und zwar im Bereich von deren Ende. Der Führungsstift 17 befindet sich im Bereich des äußeren, geschlossenen Endes der Führungsbahn 19. Der Anschlag 20 ist von der Leiste 22 des Gleitschlittens 6 beabstandet. Der Arretierstift 28 am Ende des Hebelarms 29 des Zwischenhebels 10 drückt auf die Führungsbahn 30 des Sperrhebels 23, so daß der Sperrhebel 23 um seine Achse 24 im Gegenuhrzeigersinn verschwenkt ist.

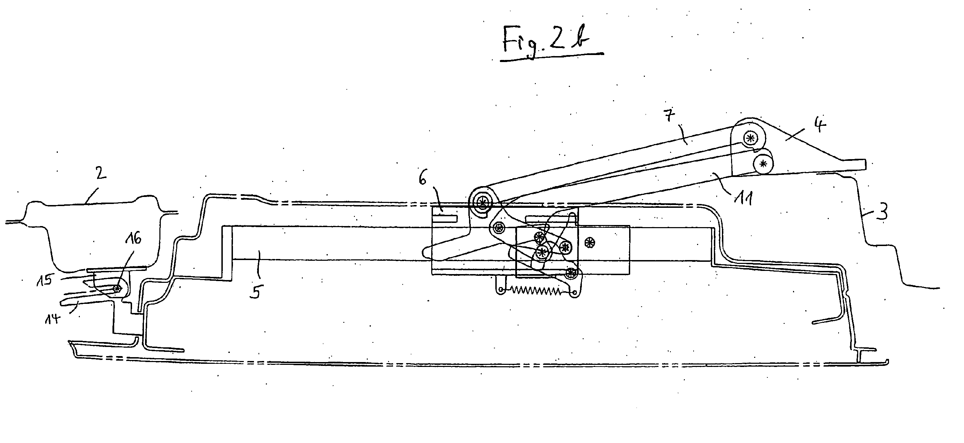

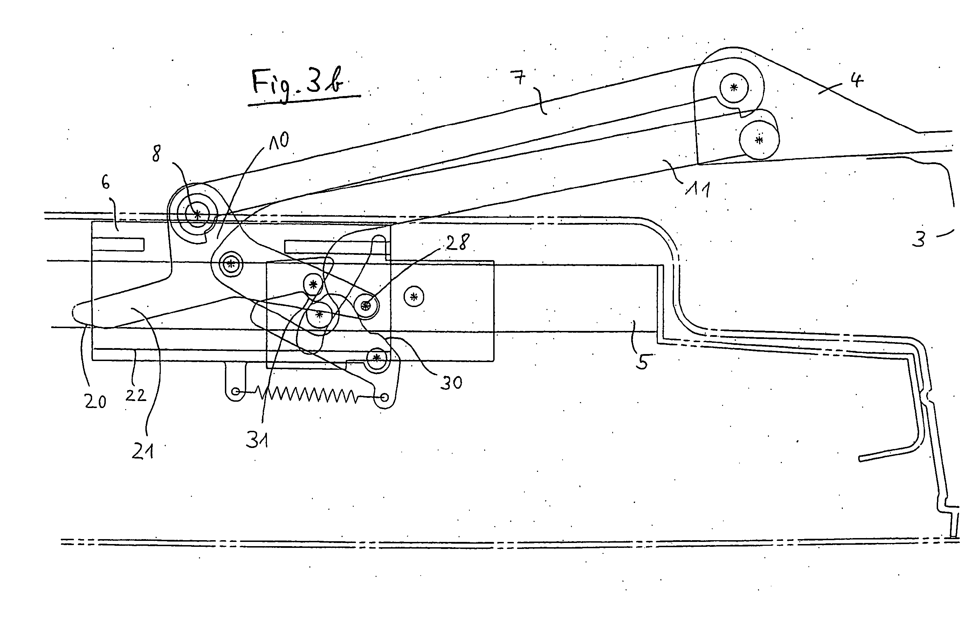

Im Verlauf der Öffnungsbewegung wird anschließend die Stellung nach Fig. 2b und 3b erreicht. Diese Stellung kann insbesondere dadurch erreicht werden, daß der Scharnierbügel 7 um das Gelenk 9 am Karosserieflansch 4 gegen den Uhrzeigersinn verschwenkt wird. An dem Karosserieflansch 4 kann ein Motor, insbesondere ein Elektromotor, zum Antrieb des Scharnierbügels 7 um das Gelenk 9 vorhanden sein. Die Öffnungsbewegung kann allerdings auch von Hand erzeugt werden. Insbesondere kann der Scharnierbügel 7 manuell um das Gelenk 9 im Gegenuhrzeigersinn verschwenkt werden.

Durch die Verschwenkung des Scharnierbügels 7 wird auch der Steuerhebel 11 entgegen dem Uhrzeigersinn verschwenkt. Der Zwischenhebel 10 wird durch die Verschwenkung des Scharnierbügels 7 um das Gelenk 9 ebenfalls zwangsgeführt, da er mit dem Scharnierbügel 7, dem Steuerhebel 11 und dem Karosserieflansch 4 - wie ausgeführt - ein Mehrgelenk bildet.

Durch die Öffnungsbewegung wird die Scharnierkulisse 14 um den Scharnierbolzen 16 gedreht. Der Gleitschlitten 6 ist während dieser Bewegung ebenfalls zwangsgeführt. Eine Verschwenkung des Gleitschlittens 6 wird durch die Führung der Scharnierkulisse 14 in dem Scharnierbolzen 16 verhindert. Auch die Führungsschiene 5 ist zwangsgeführt. Eine Längsverschiebung der Führungsschiene 5 in dem Gleitschlitten 6 wird durch die Führung des Führungsstifts 17 an dem Hebelarm 18 des Steuerhebels 11 in der türfesten Führungsbahn 19 verhindert. Die Richtung der U-förmigen Scharnierkulisse 14 verläuft im wesentlichen von dem Gleitschlitten 6 weg, so daß eine Drehung des Gleitschlittens 6 um das Gelenk 8 wirkungsvoll verhindert wird. Die Führungsbahn 19 verläuft im wesentlichen quer zur Längsrichtung der Führungsschiene 5, so daß eine Längsverschiebung der Führungsschiene 5 in dem Gleitschlitten 6 wirksam verhindert wird.

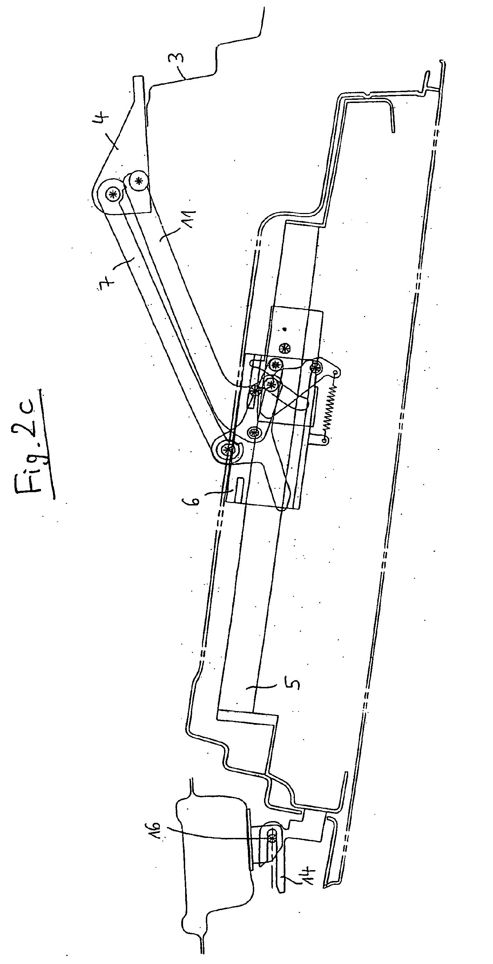

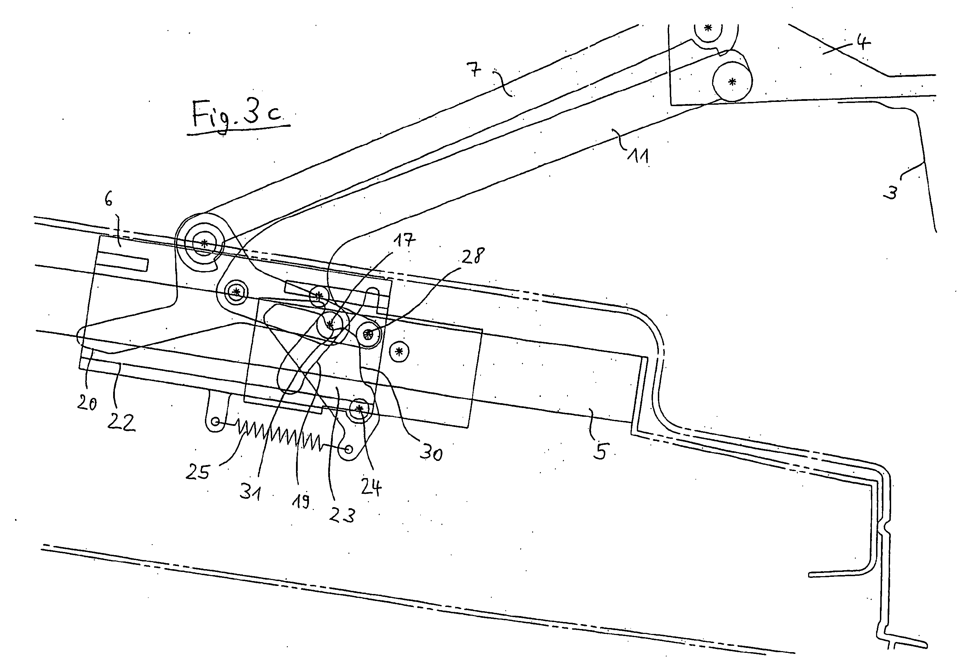

Im weiteren Verlauf der Öffnung der Schiebetüre 1 wird die Stellung gemäß Fig. 2c und 3c erreicht. Diese Stellung wird durch eine weitere, motorisch oder manuell angetriebene Verschwenkung des Scharnierbügels 7 gegen den Uhrzeigersinn um das Gelenk 9 erreicht. Der Scharnierbolzen 16 bewegt sich von dem Ende der U-förmigen Scharnierkulisse 14 weg. Der Führungsstift 17 bewegt sich in der Führungsbahn 19 nach innen. Der Anschlag 20 bewegt sich zur Leiste 22 hin. Der Arretierstift 28 bewegt sich längs der Führungsbahn 30 des Sperrhebels 23. Diese Führungsbahn 30 ist derart gestaltet, daß der Sperrhebel 23 durch die Kraft der Zugfeder 25 im Uhrzeigersinn um die Achse 24 gedreht wird.

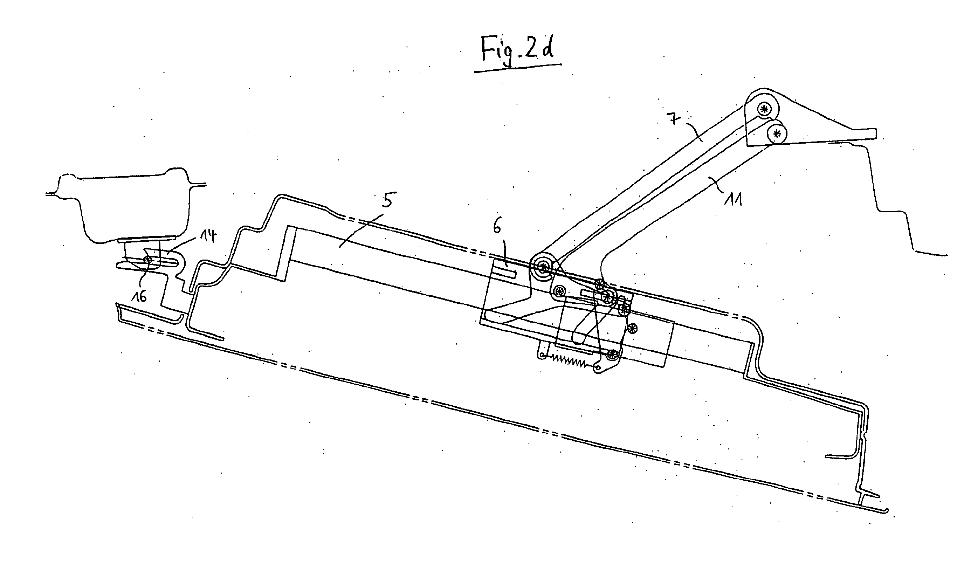

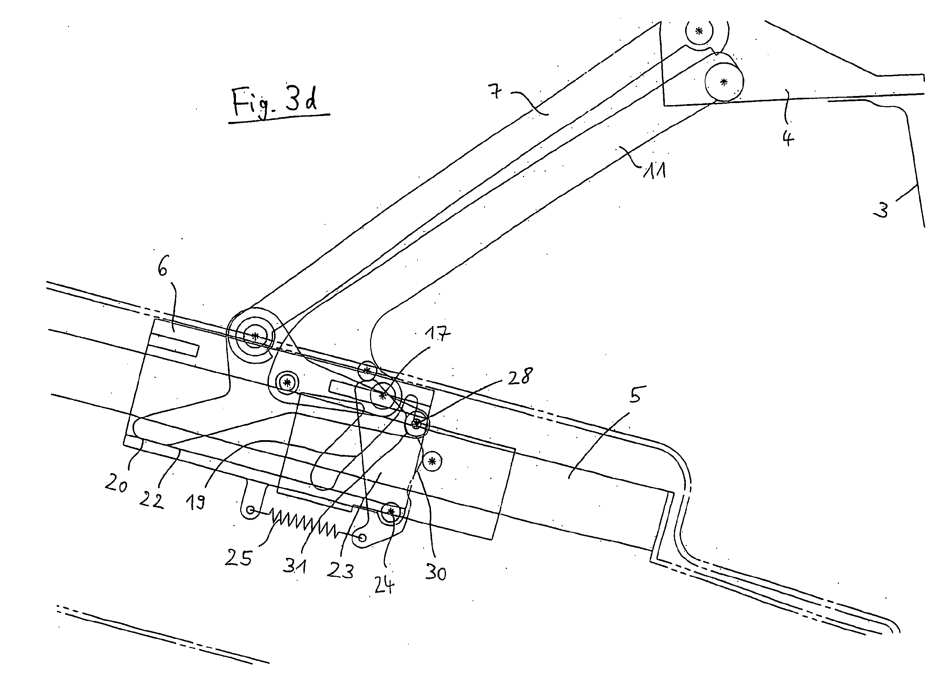

Bei der weiteren Öffnung der Schiebetüre 1 wird die Stellung gemäß Fig. 2d und 3d erreicht. Der Scharnierbolzen 16 befindet sich am Ende der U-förmigen Scharnierkulisse 14. Der Führungsstift 17 erreicht das innere Ende der Führungsbahn 19. Der Anschlag 20 schlägt an die Leiste 22 des Gleitschlittens 6 an. Der Arretierstift 28 liegt in der Rastvertiefung 31 der Führungsbahn 30 des Sperrhebels 23. Die Führungsbahn 30 ist derart ausgestaltet, daß der Sperrhebel 23 durch die Kraft der Zugfeder 25 um etwa 90° im Uhrzeigersinn um die Achse 24 verschwenkt worden ist.

In der Stellung gemäß Fig. 2d und 3d wird der Scharnierbolzen 16 von der U-förmigen Scharnierkulisse 14 freigegeben. Ferner wird der Führungsstift 17 von der

Führungsbahn 19 freigegeben. Die bis dahin wirksame Zwangsführung durch den Scharnierbolzen 16 in der U-förmigen Scharnierkulisse 14 und den Führungsstift 17 in der Führungsbahn 19 endet mit Erreichen der Stellung gemäß Fig. 2d und 3d. Ab der Stellung gemäß Fig. 2d und 3d wird bei der weiteren Öffnungsbewegung der Schiebetüre 1 die Zwangsführung wirksam, die durch den Anschlag 20, der an der Leiste 22 des Gleitschlittens 6 anliegt, und durch den Arretierstift 28, der in der Rastvertiefung 31 der Führungsbahn 30 des Sperrhebels 23 liegt, vermittelt wird. Durch den Anschlag 20, der an der Leiste 22 des Gleitschlittens 6 anliegt, wird eine Verschwenkung des Gleitschlittens 6 um das Gelenk 8 im Uhrzeigersinn verhindert. Durch den Arretierstift 28, der in der Rastvertiefung 31 der Führungsbahn 30 des Sperrhebels 23 liegt, wird eine Verschwenkung des Gleitschlittens 6 um das Gelenk 8 gegen den Uhrzeigersinn verhindert. Auf diese Weise wird die bis dahin mögliche Drehbewegung des Gleitschlittens 6 um das Gelenk 8 relativ zu dem Zwischenhebel 10 arretiert. Der Gleitschlitten 6 folgt dann im Laufe der weiteren Öffnungsbewegung dem Zwischenhebel 10, der Bestandteil des Mehrgelenks ist, das aus dem Scharnierbügel 7, dem Steuerhebel 11, dem Zwischenhebel 10 und dem Karosserieflansch 4 besteht.

Während der weiteren Öffnungsbewegung wird die Führungsschiene 5 längs dem Gleitschlitten 6 bewegt. Diese Bewegung kann durch einen Motor, insbesondere einen Elektromotor, bewirkt werden. Sie kann allerdings auch manuell erzeugt werden. An dem Gleitschlitten 6 kann ein Elektromotor angebracht sein, der die Führungsschiene 5 längs dem Gleitschlitten 6 bewegt. Gleichzeitig wird der Scharnierbügel 7 durch einen Motor oder manuell um das Gelenk 9 gegen den Uhrzeigersinn gedreht. Es ist möglich, auf eine exakte Kopplung dieser Bewegungen zu verzichten. Die Antriebe können derart aufeinander abgestimmt sein, daß die Drehbewegung, insbesondere eine konstante Drehbewegung, des Scharnierbügels 7 gegen den Uhrzeigersinn um das Gelenk 9 im wesentlichen zur gleichen Zeit beginnt wie eine durch einen Motor angetriebene Längsbewegung der Führungsschiene 5 längs dem Gleitschlitten 6 mit einer vorgegebenen, vorzugsweise konstanten Geschwindigkeit. Die Schiebetüre kann auch dann einwandfrei und insbesondere ohne Kollisionen mit Teilen des Fahrzeugs durchgeführt werden, wenn die beiden Bewegungen nicht miteinander synchronisiert sind. Ferner ist es möglich, die Schiebetüre 1 ausschließlich manuell zu öffnen. Dies ist insbesondere auch dann möglich, wenn einer oder beide Motoren aufgrund eines Defekts ausfallen. Die Schiebetüre 1 kann also auch durch eine Notentriegelung geöffnet werden.

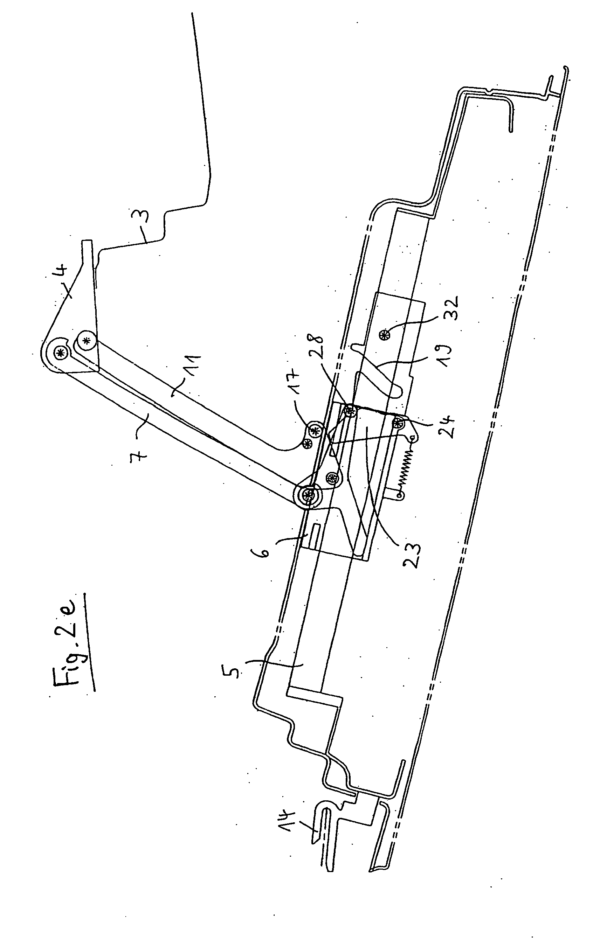

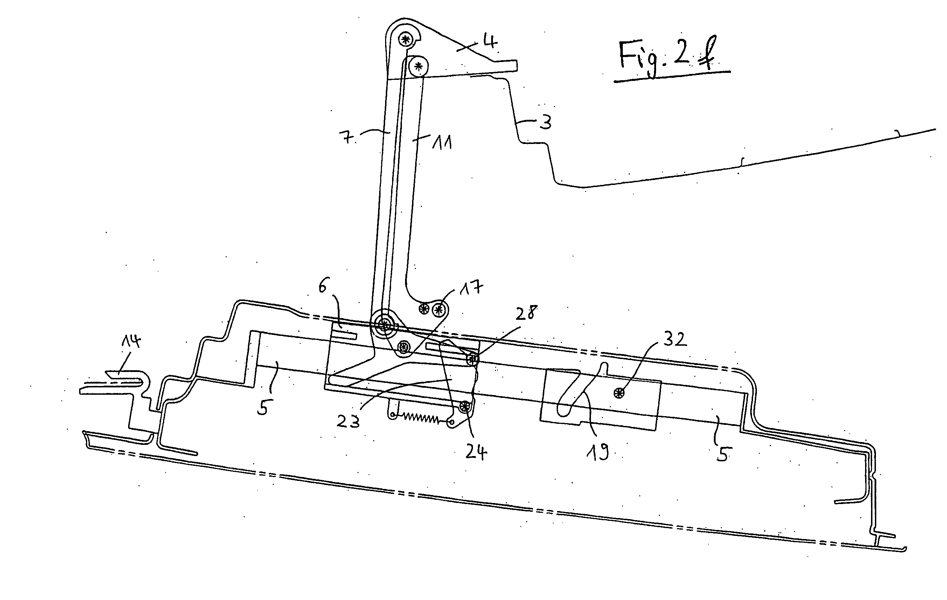

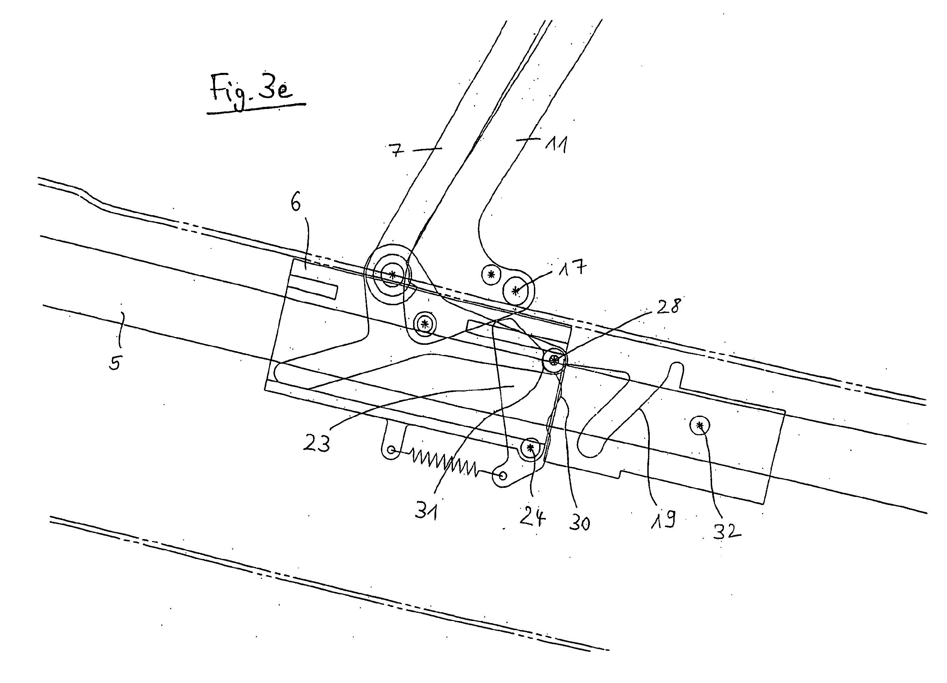

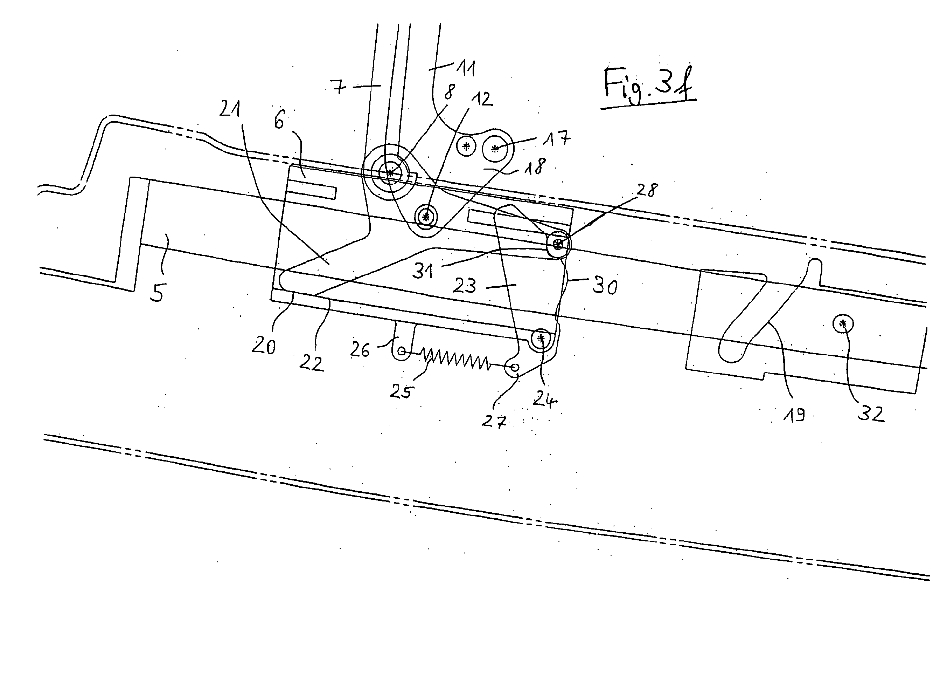

Im weiteren Verlauf der Öffnungsbewegung wird die Stellung gemäß Fig. 2e und 3e erreicht sowie anschließend die Stellung gemäß Fig. 2f und 3f.

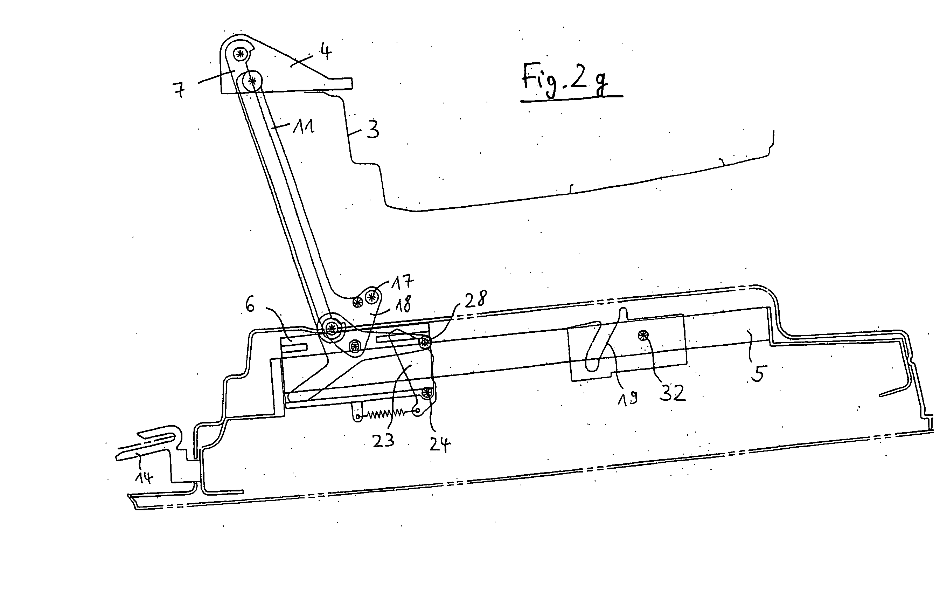

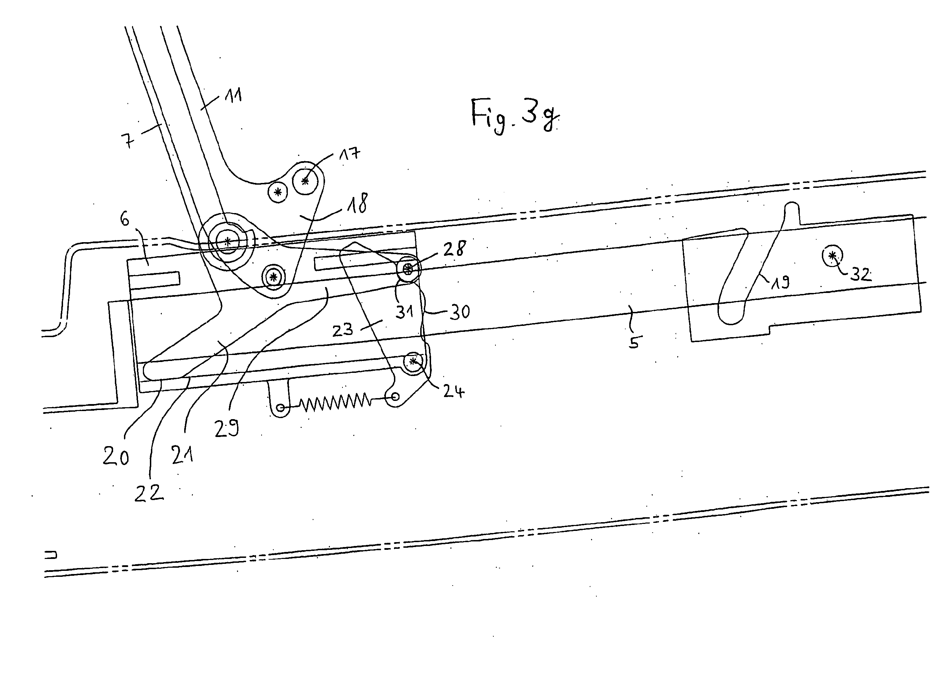

Die vollständig geöffnete Stellung der Schiebetüre 1 ist in Fig. 2g und 3g dargestellt. Nach wie vor berührt der Anschlag 20 die Leiste 22 und liegt der Arretierstift 28 in der Rastvertiefung 31.

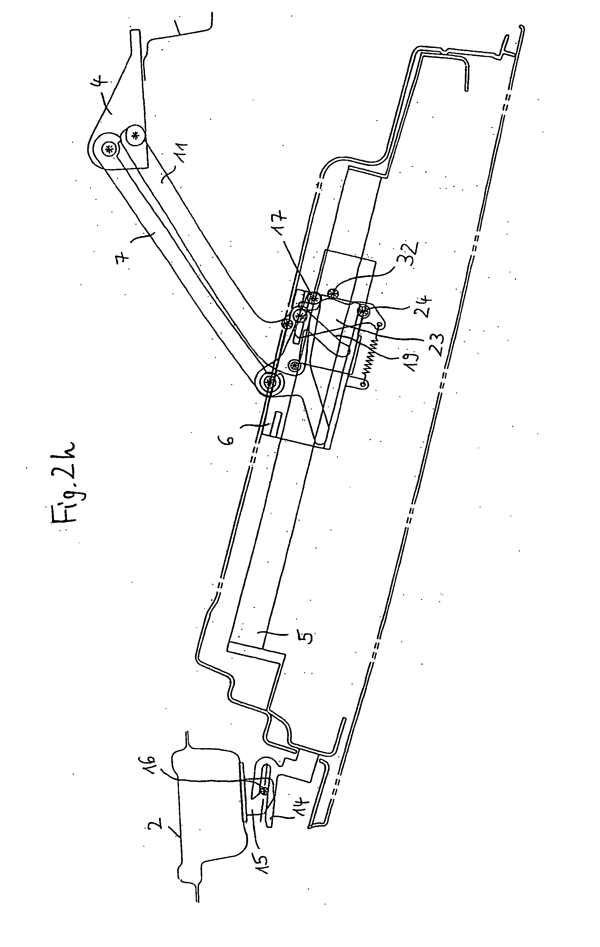

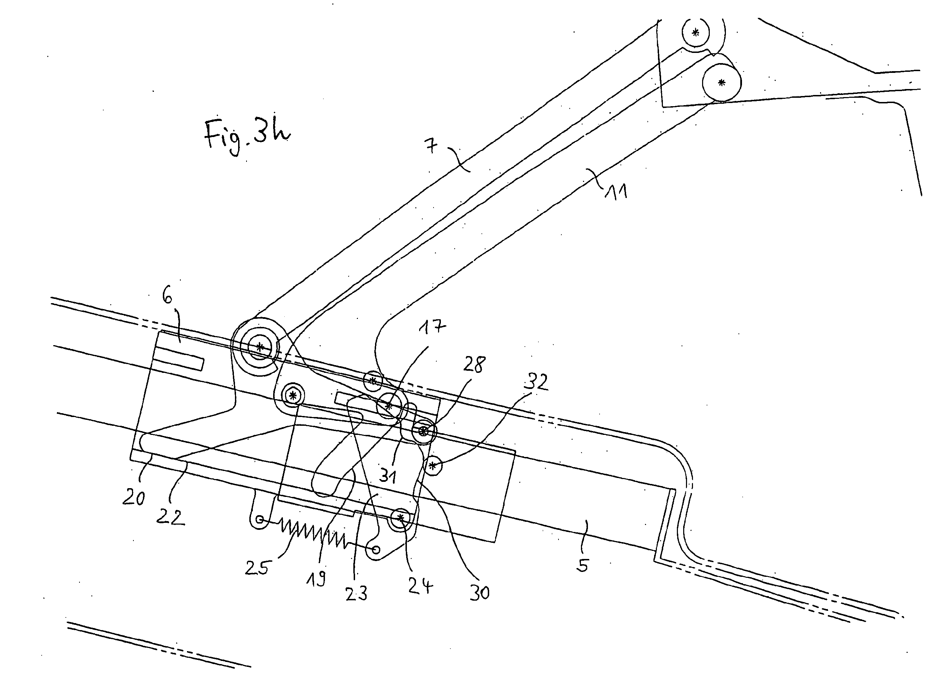

Wenn die Schiebetüre 1 geschlossen werden soll, werden, ausgehend von der vollständig geöffneten Stellung gemäß Fig. 2g und 3g, die Stellungen gemäß 2f und 3f und danach gemäß Fig. 2e und 3e durchlaufen. Anschließend wird die Stellung gemäß Fig. 2h und 3h erreicht, die der Stellung gemäß Fig. 2d und 3d entspricht. In dieser Stellung berührt der türfeste Entriegelungsstift 32 die Führungsbahn 30 des Sperrhebels 23. Der Entriegelungsstift 32 schlägt an der Führungsbahn 30 des Sperrhebels 23 an und drückt diesen in der Folge entgegen der Kraft der Zugfeder 25 entgegen dem Uhrzeigersinn um die Achse 24, so daß der Arretierstift 28 aus der Rastvertiefung 31 herauswandert und freigegeben wird. In der weiteren Folge der Schließbewegung gleitet der Arretierstift 28 längs der Führungsbahn 30, wodurch der Sperrhebel 23 weiter gegen den Uhrzeigersinn entgegen der Kraft der Feder 25 um die Achse 24 verschwenkt wird.

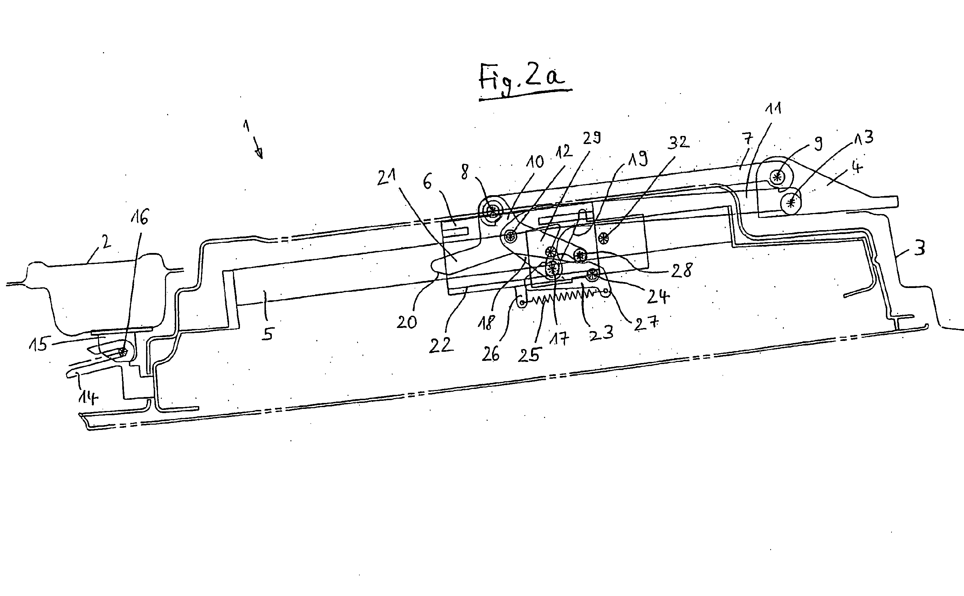

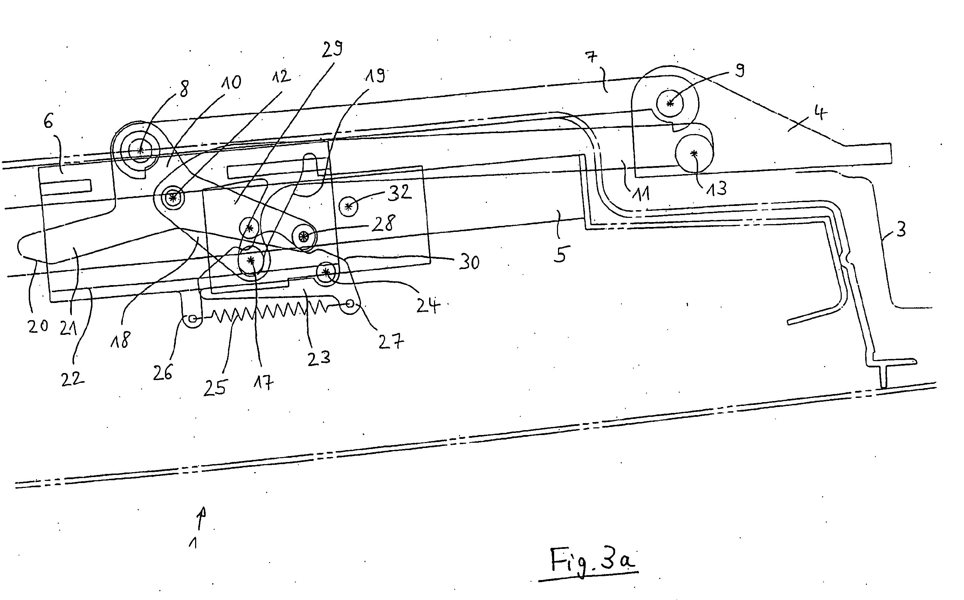

In der Stellung gemäß Fig. 2h und 3h, in der der Entriegelungsstift 32 an die Führungsbahn 30 des Sperrhebels 23 anschlägt, tritt der Scharnierbolzen 16 in die U-förmige Scharnierkulisse 14 ein, und tritt der Führungsstift 17 in die Führungsbahn 19 ein. Ferner hebt in dieser Stellung der Anschlag 20 von der Leiste 22 des Gleitschlittens 6 ab. In der Stellung gemäß Fig. 2h und 3h wird also die Zwangsführung durch die Arretierung des Gleitschlittens 6 an dem Zwischenhebel 10 durch den Anschlag 20 und den Arretierstift 28 wieder an die Zwangsführung durch den Scharnierbolzen 16 und den Führungsstift 17 übergeben. Im weiteren Verlauf der Schließbewegung werden die Stellungen der Figuren 2c und 3c und der Figuren 2b und 3b durchlaufen, bis schließlich die vollkommen geschlossene Stellung der Fig. 2a und 3a erreicht wird.

In Fig. 1a und 1b sind die Wege des vorderen Endes 33 und des hinteren Endes 34 des äußeren Türblechs 35 eingezeichnet. Während des ersten Teils der Öffnungsbewegung, in dem die Schiebetüre 1 im wesentlichen um den Scharnierbolzen 16 verschwenkt wird, bewegt sich das vordere Ende 33 überhaupt nicht oder nur geringfügig, und das hintere Ende 34 wird im wesentlichen rechtwinkelig von der Karosserie nach außen weg bewegt, wie durch die Linie 36 dargestellt. Am Ende des ersten Teils der Öffnungsbewegung nimmt das äußere Türblech 35 die Stellung der Linie 37 ein.

Beim zweiten Teil der Öffnungsbewegung der Schiebetüre 1 bewegt sich das vordere Ende 33 des äußeren Türblechs 35 längs einer im wesentlichen bogenförmigen Linie 38, die einen verhältnismäßig großen Radius hat. Das hintere Ende 34 bewegt sich längs der bogenförmigen Linie 39 mit einem kleineren Radius. Am Ende des zweiten Teils der Öffnungsbewegung nimmt das äußere Türblech 35 die Stellung der mit 40 bezeichneten Linie ein.

Fig. 4 bis 7 zeigen eine abgewandelte Ausführungsform der Schiebetüre, bei der gleiche Teile mit gleichen Bezugszeichen versehen sind, so daß sie nicht erneut beschrieben werden müssen.

Bei der Ausführungsform nach Fig. 4 bis 7 ist anstelle des Entriegelungsstifts 32 ein Umlenkhebel 41 vorhanden, der an der Schiebetüre 1 um eine Achse 42 drehbar gelagert ist. Der Umlenkhebel 41 ist durch eine Zugfeder 43 belastet, die zum einen an einem türfesten Punkt 44 und zum anderen an einem Punkt 45 des Umlenkhebels 41 befestigt ist. Der Punkt 44 liegt innerhalb und hinter der Achse 42. Der Punkt 45 liegt vor der Achse 42. Die Zugfeder 43 erstreckt sich also über die Achse 42 hinweg, so daß der Umlenkhebel 41 zwei stabile Stellungen einnehmen kann. Die Endstellungen des Umlenkhebels 41 werden durch entsprechende Anschläge, die in der Zeichnung nicht dargestellt sind, festgelegt.

An dem Gleitschlitten 6 ist ein Aktivierungsstift 46 vorgesehen. Der Aktivierungsstift 46 dient zum Verschwenken des Umlenkhebels 41 um die Achse 42 entgegen dem Uhrzeigersinn während der Öffnungsbewegung der Schiebetüre 1. Der Aktivierungsstift 46 befindet sich an dem Gleitschlitten 6 hinter dem Sperrhebel 23.

An dem Zwischenhebel 10 ist ein Deaktivierungsstift 47 vorgesehen. Der Deaktivierungsstift 47 dient zum Verschwenken des Umlenkhebels 41 während der Bewegung der Schiebetüre 1 in die geschlossene Stellung. Der Deaktivierungsstift 47 ist an dem Hebelarm 29 des Zwischenhebels 10 vorgesehen. Zu diesem Zweck ist dieser Hebelarm 29 gegenüber der Ausführungsform nach Fig. 1 bis 3 über den Arretierstift 28 hinaus verlängert. Der Deaktivierungsstift 47 befindet sich auf dem Hebelarm 29 in der Verlängerung der von dem Gelenk 12 zum Arretierstift 28 verlaufenden Linie.

In der geschlossenen Stellung der Schiebetüre 1 gemäß Fig. 5a und 6a befindet sich der Umlenkhebel 41 in der nach außen verschwenkten Stellung, in der der Punkt 45 des Umlenkhebels 41 weiter außen liegt als die Achse 42 des Umlenkhebels 41. Die Achse 42 liegt innerhalb der Feder-Verbindungslinie zwischen den Punkten 44 und 45. Dies ist die deaktivierte Stellung des Umlenkhebels 41.

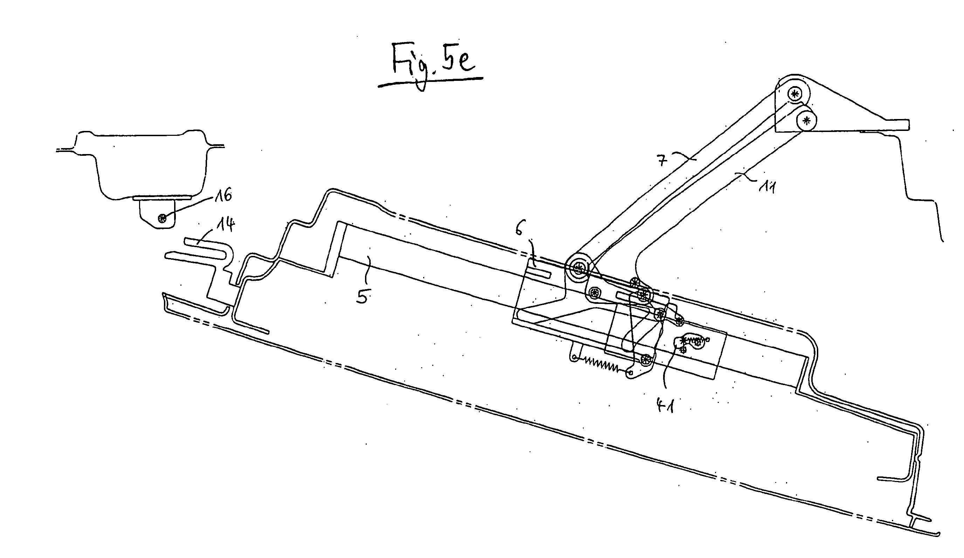

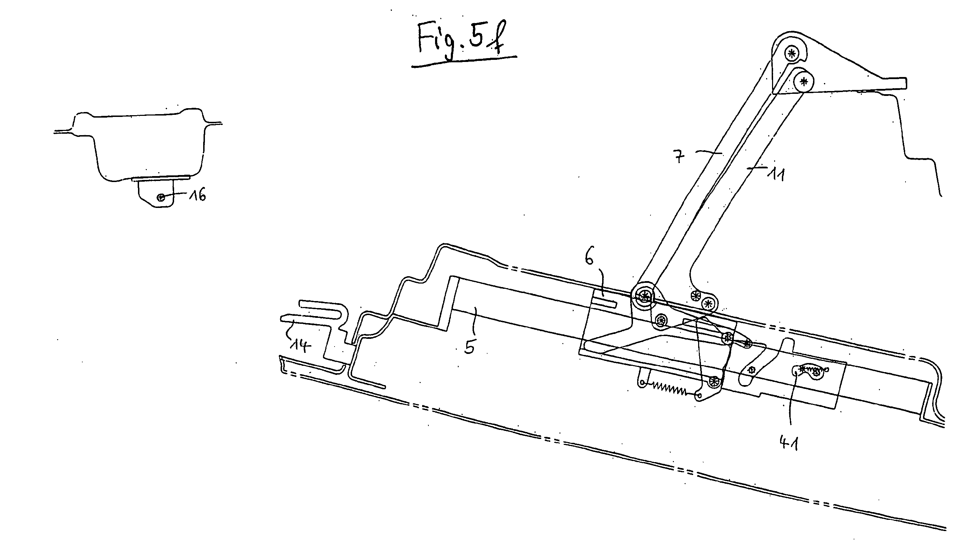

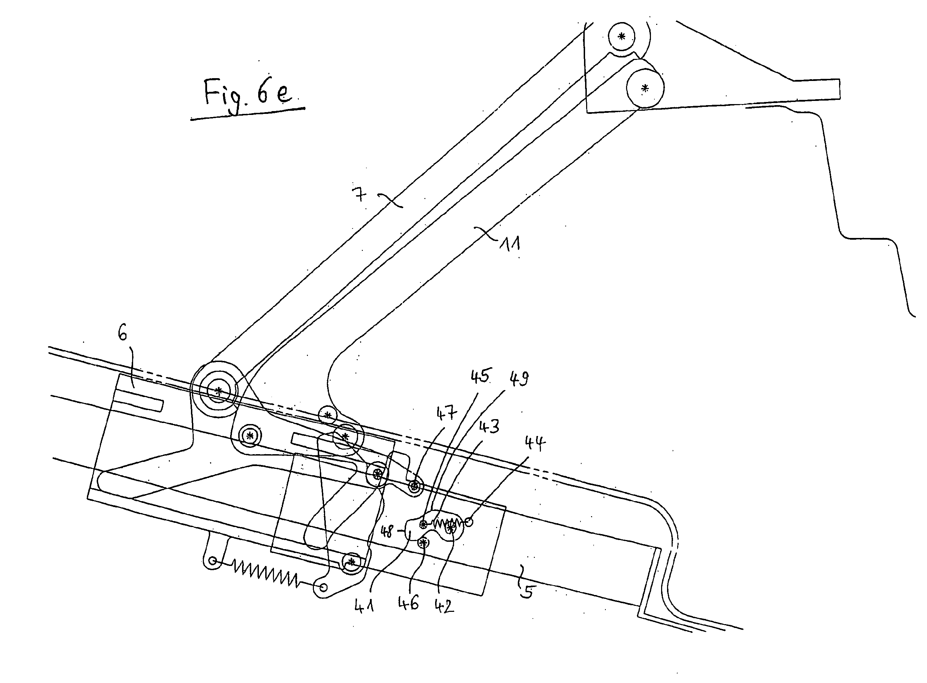

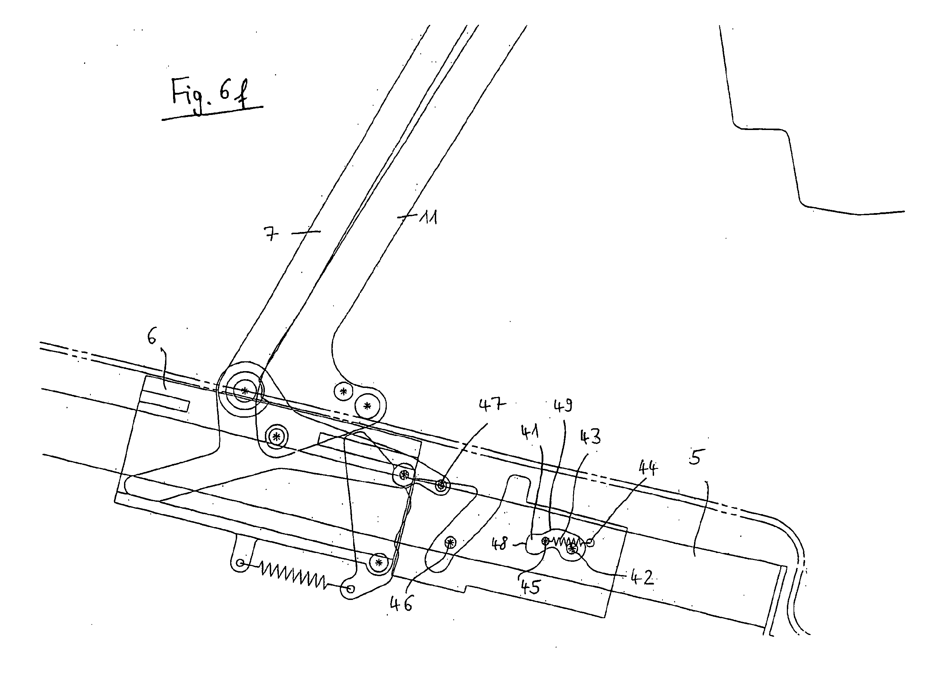

Während der Öffnungsbewegung der Schiebetüre 1 schlägt der Aktivierungsstift 46 an dem Umlenkhebel 41 an, wie in Fig. 5e und 6e gezeigt. Hierdurch wird der Umlenkhebel 41 im Uhrzeigersinn um die Achse 42 verschwenkt, bis die Zugfeder 43 auf die andere, nämlich innere Seite der Achse 42 gelangt, wie in Fig. 5e und 6e gezeigt. Jetzt liegt die Achse 42 außerhalb der Feder-Verbindungslinie zwischen den Punkten 44 und 45. In dieser Stellung schnappt die Zugfeder 43 um, so daß der Umlenkhebel 41 in die aktivierte Stellung gelangt, die in Fig. 5f und 6f gezeigt ist und in der der Punkt 45 in Fahrzeug-Längsrichtung vor der Achse 42 des Umlenkhebels 41 liegt. Diese aktivierte Stellung behält der Umlenkhebel 41 bei der weiteren Öffnung der Schiebetüre 1 bei.

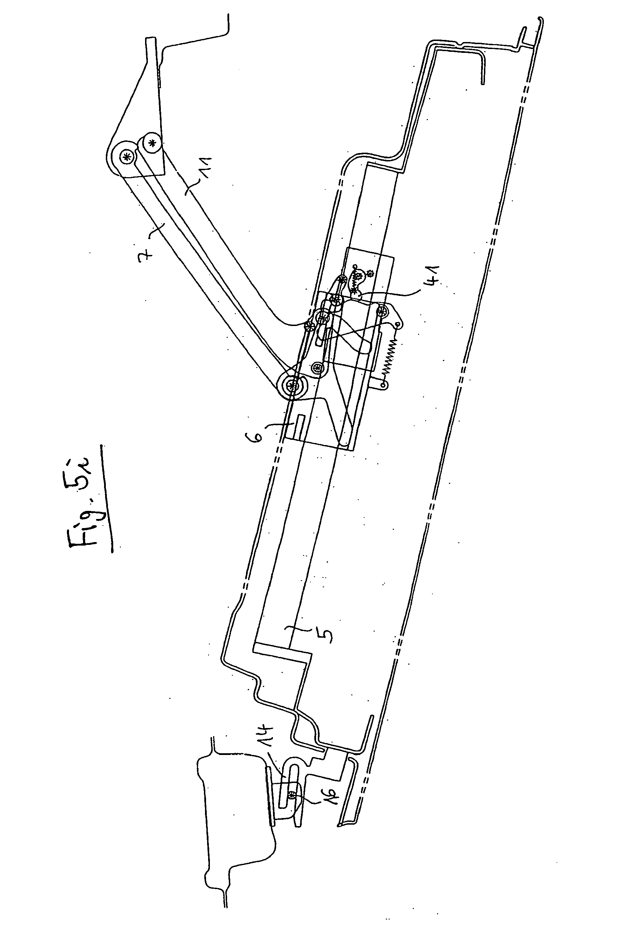

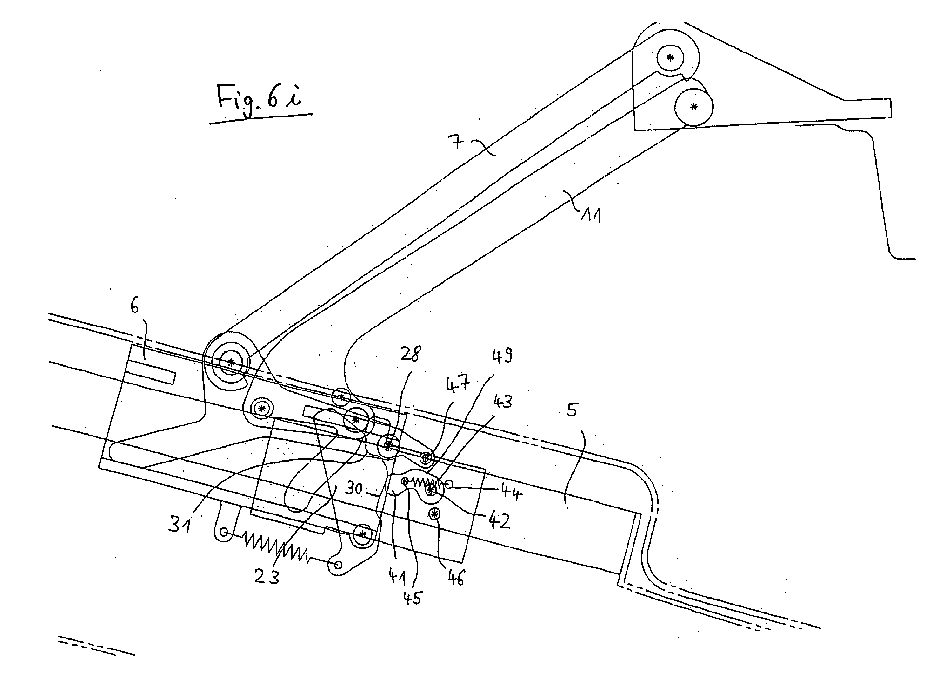

Beim Schließen der Schiebetüre 1 schlägt das äußere Ende 48 des Umlenkhebels 41, der sich in der aktivierten Stellung befindet, an die Führungsbahn 30 des Sperrhebels 23 an, wie in Fig. 5i und 6i gezeigt. Hierdurch wird der Sperrhebel 23 im Gegenuhrzeigersinn um die Achse 24 verschwenkt, und die Verrastung des Arretierstifts 28 in der Rastvertiefung 31 wird gelöst.

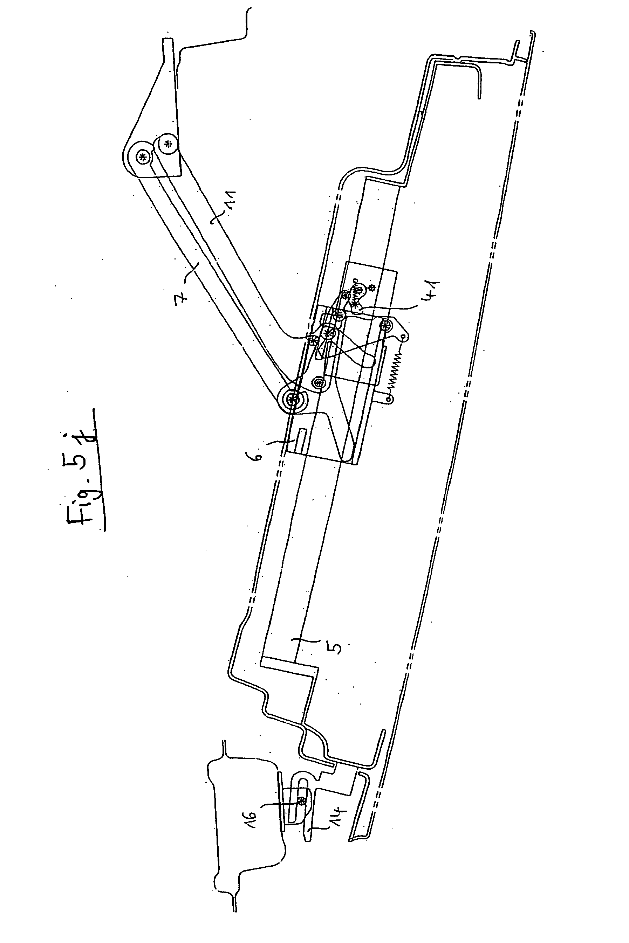

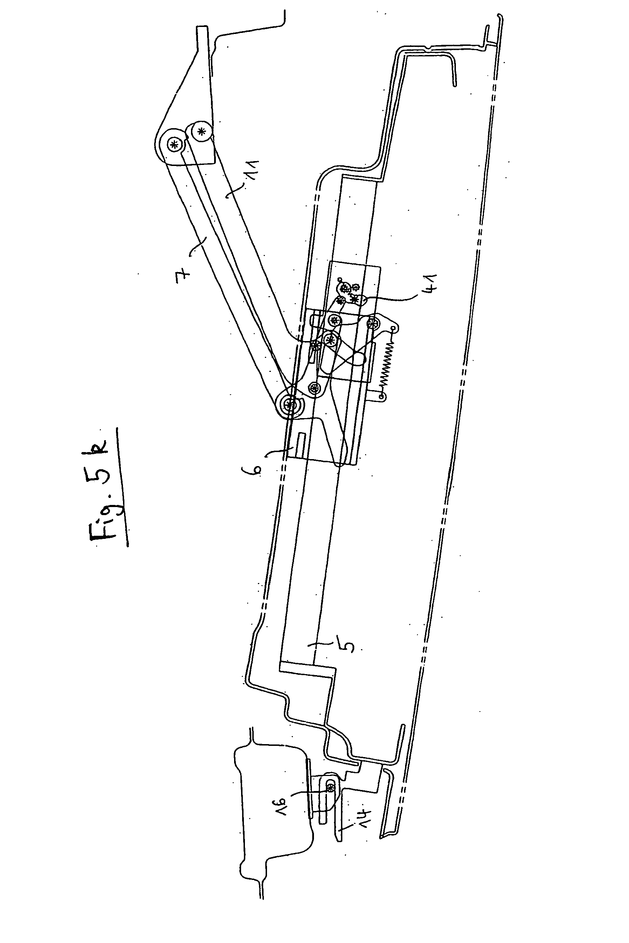

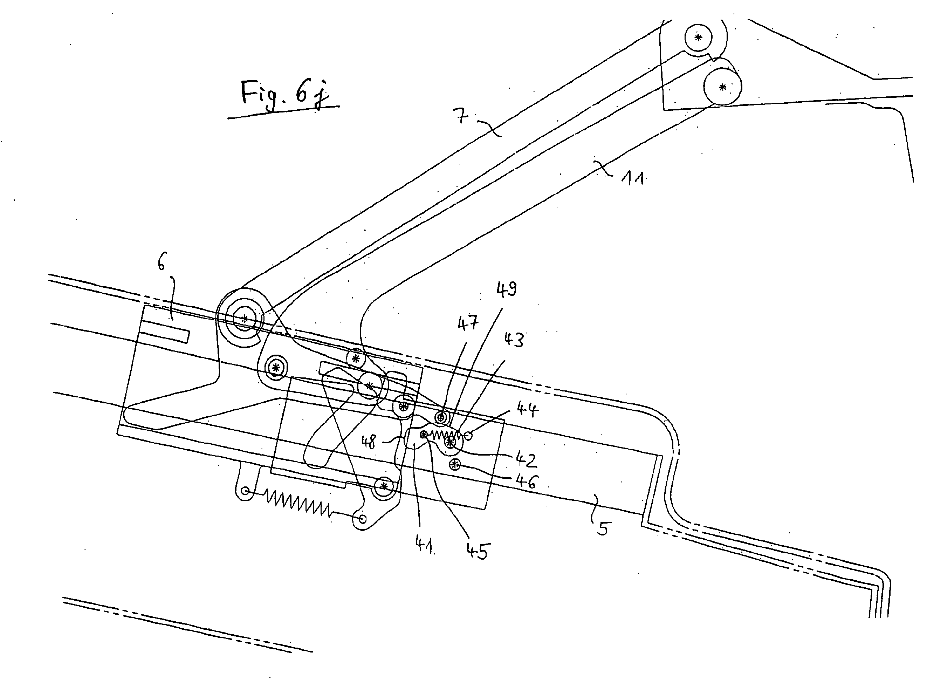

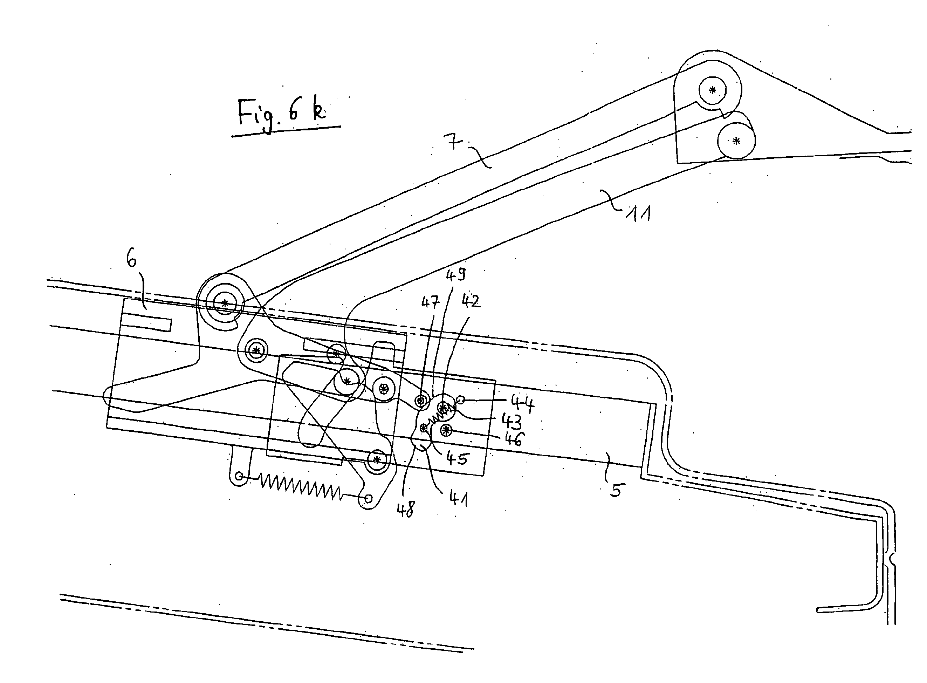

Beim weiteren Schließen der Schiebetüre 1 schlägt der Deaktivierungsstift 47 an die innere Führungsbahn 49 des Umlenkhebels 41 an, wie in Fig. 5j und 6j gezeigt. Der Deaktivierungsstift 47 drückt im folgenden die innere Führungsbahn 49 nach unten, so daß der Umlenkhebel 41 gegen den Uhrzeigersinn um die Achse 42 verschwenkt wird, bis die in Fig. 5k und 6k gezeigte Stellung erreicht ist, in der die Zugfeder 43 außerhalb der Achse 42 liegt. In dieser Stellung schnappt der Umlenkhebel 41 durch die Kraft der Zugfeder 43 um und nimmt die in Fig. 5I und 6I gezeigte, deaktivierte Stellung ein.

## Patentansprüche

1. Schiebetüre für ein Fahrzeug mit
einer Führungsschiene (5),
einem Gleitschlitten (6), der an der Führungsschiene (5) längsverschieblich gelagert ist,
und einem Scharnierbügel (7), der an dem Gleitschlitten (6) und an einem Karosserieflansch (4) drehbar gelagert ist,
**gekennzeichnet durch**
einen Zwischenhebel (10), der an dem Gleitschlitten (6) drehbar gelagert ist,
und einen Steuerhebel (11), der an dem Zwischenhebel (10) und an einem Karosserieflansch (4) drehbar gelagert ist.

2. Schiebetüre nach Anspruch 1, **dadurch gekennzeichnet, daß** die Schiebetüre (1) an dem dem Scharnierbügel (7) abgewandten Ende drehbar und längsverschieblich gelagert ist.

3. Schiebetüre nach Anspruch 1 oder 2, **dadurch gekennzeichnet, daß** an dem Steuerhebel (11) ein Führungsstift (17) vorgesehen ist, der in einer an der Schiebetüre (1) vorgesehenen Führungsbahn (19) geführt ist.

4. Schiebetüre nach einem der vorhergehenden Ansprüche, **dadurch gekennzeichnet, daß** der Gleitschlitten (6) gegenüber dem Zwischenhebel (10) arretierbar ist.

5. Schiebetüre nach einem der vorhergehenden Anspürche, **dadurch gekennzeichnet, daß** der Zwischenhebel (10) einen Anschlag (20) für den Gleitschlitten (6) aufweist.

6. Schiebetüre nach einem der vorhergehenden Ansprüche, **dadurch gekennzeichnet, daß** an dem Gleitschlitten (6) ein Sperrhebel (23) drehbar gelagert ist.

7. Schiebetüre nach einem der vorhergehenden Ansprüche, **dadurch gekennzeichnet, daß** der Zwischenhebel (10) einen Arretierstift (28) aufweist.

8. Schiebetüre nach Anspruch 6 oder 7, **dadurch gekennzeichnet, daß** der Sperrhebel (23) eine Führungsbahn (30) für den Arretierstift (28) aufweist.

9. Schiebetüre nach einem der Ansprüche 6 bis 8, **dadurch gekennzeichnet, daß** an dem Sperrhebel (23), insbesondere an dessen Führungsbahn (30), eine Rastvertiefung (31) für den Arretierstift (28) vorgesehen ist.

10. Schiebetüre nach einem der vorhergehenden Ansprüche, **dadurch gekennzeichnet, daß** an der Schiebetüre (1) ein Entriegelungsstift (32) vorgesehen ist.

11. Schiebetüre nach einem der Ansprüche 1 bis 9, **dadurch gekennzeichnet, daß** an der Schiebetüre (1) ein Umlenkhebel (41) drehbar (42) gelagert ist.

12. Schiebetüre nach Anspruch 11, **dadurch gekennzeichnet, daß** der Umlenkhebel (41) federbelastet (43) ist.

13. Schiebetüre nach Anspruch 11 oder 12, **dadurch gekennzeichnet, daß** an dem Gleitschlitten (6) ein Aktivierungsstift (46) zum Verschwenken des Umlenkhebels (41) vorgesehen ist.

14. Schiebetüre nach einem der Ansprüche 11 bis 13, **dadurch gekennzeichnet, daß** an dem Zwischenhebel (10) ein Deaktivierungsstift (47) zum Verschwenken des Umlenkhebels (41) vorgesehen ist.

## Claims

1. Sliding door for a vehicle comprising a guide rail (5), a sliding carriage (6) which is mounted in a longitudinally displaceable manner on the guide rail (5), and a hinge bracket (7) which is rotatably mounted on the sliding carriage (6) and on a body flange (4), **characterized by** an intermediate lever (10) which is rotatably mounted on the sliding carriage (6), and a control lever (11) which is rotatably mounted on the intermediate lever (10) and on a body flange (4).

2. Sliding door according to Claim 1, **characterized in that** the sliding door (1) is mounted in a rotatable and longitudinally displaceable manner at the end facing away from the hinge bracket (7).

3. Sliding door according to Claim 1 or 2, **characterized in that** a guide pin (17) is provided on the control lever (11) and is guided in a guide path (19) provided on the sliding door (1).

4. Sliding door according to one of the preceding claims, **characterized in that** the sliding carriage (6) can be locked with respect to the intermediate lever (10).

5. Sliding door according to one of the preceding claims, **characterized in that** the intermediate lever (10) has a stop (20) for the sliding carriage (6).

6. Sliding door according to one of the preceding claims **characterized in that** a blocking lever (23) is rotatably mounted on the sliding carriage (6).

7. Sliding door according to one of the preceding claims, **characterized in that** the intermediate lever (10) has a locking pin (28).

8. Sliding door according to Claim 6 or 7, **characterized in that** the blocking lever (23) has a guide path (30) for the locking pin (28).

9. Sliding door according to one of Claims 6 to 8, **characterized in that** a latching depression (31) for the locking pin (28) is provided on the blocking lever (23), in particular on its guide path (30).

10. Sliding door according to one of the preceding claims, **characterized in that** an unlocking pin (32) is provided on the sliding door (1).

11. Sliding door according to one of Claims 1 to 9, **characterized in that** a deflection lever (41) is rotatably (42) mounted on the sliding door (1).

12. Sliding door according to Claim 11, **characterized in that** the deflection lever (41) is spring-loaded (43).

13. Sliding door according to Claim 11 or 12, **characterized in that** an activation pin (46) for pivoting the deflection lever (41) is provided on the sliding carriage (6).

14. Sliding door according to one of Claims 11 to 13, **characterized in that** a deactivation pin (47) for pivoting the deflection lever (41) is provided on the intermediate lever (10).

## Revendications

1. Porte coulissante pour un véhicule automobile, comportant
un rail de guidage (5),
un chariot (6) qui est monté de manière à coulisser longitudinalement sur le rail de guidage (5),
et un étrier formant charnière (7), qui est monté rotatif sur le chariot (6) et sur une patte (4) de la carrosserie,
**caractérisée par**
un levier intermédiaire (10), qui est monté rotatif sur le chariot (6),
et un levier de commande (11), qui est monté rotatif sur le levier intermédiaire (10) et sur une patte (4) de la carrosserie.

2. Porte coulissante selon la revendication 1, **caractérisée en ce que** la porte coulissante (1) est montée rotative et mobile longitudinalement au niveau de l'extrémité détournée de l'étrier formant charnière (7).

3. Porte coulissante selon la revendication 1 ou 2, **caractérisée en ce que** sur le levier de commande (11) est prévu un téton de guidage (17), qui est guidé dans une voie de guidage (19) prévue sur la porte coulissante (1).

4. Porte coulissante selon l'une quelconque des revendications précédentes, **caractérisée en ce que** le chariot (6) peut être immobilisé par rapport au levier intermédiaire (10).

5. Porte coulissante selon l'une quelconque des revendications précédentes, **caractérisée en ce que** le levier intermédiaire (10) comporte une butée (20) pour le chariot (6).

6. Porte coulissante selon l'une quelconque des revendications précédentes, **caractérisée en ce qu'**un levier d'arrêt (23) est monté rotatif sur le chariot (6).

7. Porte coulissante selon l'une quelconque des revendication précédentes, **caractérisée en ce que** le levier intermédiaire (10) comporte un téton d'arrêt (28).

8. Porte coulissante selon la revendication 6 ou 7, **caractérisée en ce que** le levier d'arrêt (23) comporte une voie de guidage (30) pour le téton d'arrêt (28).

9. Porte coulissante selon l'une quelconque des revendications 6 à 8, **caractérisée en ce qu'**un creux de blocage (31) pour le téton d'arrêt (28) est prévu sur le levier d'arrêt (23), en particulier sur la voie de guidage (30) de celui-ci.

10. Porte coulissante selon l'une quelconque des revendications précédentes, **caractérisée en ce qu'**un téton de déverrouillage (32) est prévu sur la porte coulissante (1).

11. Porte coulissante selon l'une quelconque des revendications 1 à 9, **caractérisée en ce qu'**un levier de renvoi (41) est monté rotatif (42) sur la porte coulissante (1).

12. Porte coulissante selon la revendication 11, **caractérisée en ce que** le levier de renvoi (41) est sollicité par un ressort (43).

13. Porte coulissante selon la revendication 11 ou 12, **caractérisée en ce que** sur le chariot (6) est prévu un téton d'activation (46) pour le pivotement du levier de renvoi (41).

14. Porte coulissante selon l'une quelconque des revendications 11 à 13, **caractérisée en ce que** sur le levier intermédiaire (10) est prévu un téton de désactivation (47) pour le pivotement du levier de renvoi (41).
